(19) Europäisches Patentamt
European Patent Office
Office européen des brevets

(11) **EP 4 730 772 A1**

(12) **EUROPEAN PATENT APPLICATION**

(43) Date of publication:
**22.04.2026 Bulletin 2026/17**

(21) Application number: **24315485.3**

(22) Date of filing: **18.10.2024**

(51) International Patent Classification (IPC):
*H04N 19/105* (2014.01)   *H04N 19/119* (2014.01)
*H04N 19/147* (2014.01)   *H04N 19/176* (2014.01)
*H04N 19/46* (2014.01)

(52) Cooperative Patent Classification (CPC):
**H04N 19/119; H04N 19/105; H04N 19/147;
H04N 19/176; H04N 19/46**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Beijing Xiaomi Mobile Software Co.,
Ltd.**
**Beijing Beijing 100085 (CN)**

(72) Inventors:
• **Ghaznavi Youvalari, Ramin**
**Beijing, 100085 (CN)**
• **Tissier, Alexandre**
**Beijing, 100085 (CN)**
• **Abdoli, Mohsen**
**Beijing, 100085 (CN)**

(74) Representative: **Zimmermann, Tankred Klaus
Schoppe, Zimmermann, Stöckeler
Zinkler, Schenk & Partner mbB
Patentanwälte
Radlkoferstrasse 2
81373 München (DE)**

(54) **METHOD AND APPARATUS FOR PREDICTING SUB-PARTITIONS OF A BLOCK OF A PICTURE**

(57)    A method of processing one or more blocks of a picture includes predicting one or more samples of a current block of the picture. Predicting the one or more samples of the current block includes processing a plurality of sub-partitions of the current block using a certain processing order, the certain processing order starting with a first sub-partition, and predicting a sub-partition, which follows the first sub-partition, using one or more reference samples from one or at least two different reference areas of at least three reference areas.

Fig. 15

## Description

### Technical Field

The present disclosure generally relates to the field of encoding/decoding pictures, images or videos, and embodiments of the present disclosure concern improvements regarding a prediction. More specific embodiments of the present disclosure relate to flexible prediction methods in intra sub-partitioning modes using reference samples from reference area(s).

### Background

The encoding and decoding of a picture, an image or a video is performed in accordance with a certain standard, for example, in accordance with the ISO/IEC 14496-10 Advanced Video Coding, AVC, standard (see reference [1]), the ISO/IEC 23094-1 Essential video coding, EVC, standard, the ISO/IEC 23008-2 High Efficiency Video Coding, HEVC, standard (see reference [2]), the ISO/IEC 23090-3 Versatile Video Coding, VVC, standard (see reference [3]) or the AOMedia Video 1, AV1, standard.

For encoding and decoding of a picture, a block of a picture may be partitioned into a plurality of sub-partitions, which are intra predicted using reference samples from reference area(s).

Thus, there is a need to provide further improvements for processing a partitioned block of a picture when encoding and decoding of a picture, an image or a video.

### Summary

The present disclosure provides a method of processing one or more blocks of a picture, the method comprising:

predicting one or more samples of a current block of the picture,
wherein predicting the one or more samples of the current block comprises:

- processing a plurality of sub-partitions of the current block using a certain processing order, the certain processing order starting with a first sub-partition, and
- predicting a sub-partition, which follows the first sub-partition, using one or more reference samples from one or at least two different reference areas of at least three reference areas.

Optionally, the at least three reference areas comprise at least:

- an above reference area including previously reconstructed reference samples above the current block,
- a left reference area including previously reconstructed reference samples left of the current block,
- a sub-partition reference area including reconstructed samples from a previously predicted sub-partition.

Optionally,

samples of the plurality of sub-partitions are predicted using one of the following:

- a uni-prediction mechanism,
- a bi-prediction mechanism, or
- a multi-prediction mechanism, and

the prediction mechanism used is signaled in a data stream, which includes data representing the picture.

Optionally,

for predicting the sub-partitions, which follow the first sub-partition, the one or more reference samples are selected from three or more reference areas, and
the three or more reference areas comprise a right or a bottom reference area outside of the current block, the reference area including interpolated reference samples obtained by interpolating previously reconstructed reference samples from reference areas above, above-right and left of the current block.

Optionally, for predicting the sub-partitions, respective reference areas are selected, which include reference samples providing a best prediction accuracy.

Optionally,

the respective reference areas are selected per sub-partition, which follows the first sub-partition, and are signaled in a data stream, which includes data representing the picture, or
the respective reference areas are selected for all of the plurality of sub-partitions, which follow the first sub-partition, and are signaled in a data stream, which includes data representing the picture.

Optionally,

the respective reference areas selected for all of the plurality of sub-partitions are also used for the first sub-partition, or
respective reference areas are selected for the first sub-partition, and are signaled in the data stream, or
respective reference areas are selected for the first sub-partition based on an intra mode for predicting the first sub-partition.

Optionally, the certain processing order comprises a forward processing order, the forward processing order predicting the plurality of sub-partitions in a sequence from the first sub-partition, which includes a top-left sample of the current block, to an end sub-partition, which includes a bottom-right sample of the current block.

Optionally, 9 the certain processing order comprises

- a specific processing order, the specific processing order processing the plurality of sub-partitions non-sequentially according to a defined or signaled processing order, or
- an inverse processing order, the inverse processing order predicting the plurality of sub-partitions in a sequence from the first start sub-partition, which includes a bottom-right sample of the current block, to an end sub-partition, which includes a top-left sample of the current block.

Optionally, when predicting a sub-partition using reference samples selected from a sub-partition reference area below or right of the sub-partition,

- dedicated intra prediction directions are used to facilitate a prediction process using the reference samples from the below and/or right sub-partition reference area, or
- intra prediction directions from below and/or right are mapped to corresponding intra prediction directions from above and/or left, or
- the reference samples from the below and/or right sub-partition reference area are projected to above and/or left reference areas of the current block or a currently processed sub-partition.

Optionally,

the current block is partitioned into the plurality of sub-partitions such that each of the plurality of sub-partitions has the same sub-partition size, or
the current block is partitioned into the plurality of sub-partitions such that at least two of the plurality of sub-partitions have different sub-partition sizes.

Optionally, the sub-partition, which includes the bottom-right sample of the current block, has a sub-partition size which is smaller than a sub-partition size of any other sub-partition of the current block.

Optionally, the current block is partitioned into the plurality of sub-partitions according to

- a horizontal partitioning mode which partitions the current block into N horizontal sub-partitions, each horizontal sub-partition having the same width, with N being an integer > 1, or
- a vertical partitioning mode which partitions the current block into N vertical sub-partitions, each vertical sub-partition having the same height, with N being an integer > 1.

The present disclosure provides a non-transitory computer-readable storage medium comprising instructions which, when executed by a computer, cause the computer to carry out the method of the present disclosure.

The present disclosure provides an apparatus of processing one or more blocks of a picture, the apparatus comprising:

a processing module configured to predict one or more samples of a current block of the picture,

wherein, for predicting the one or more samples of the current block, the processing module is configured to

- process a plurality of sub-partitions of the current block using a certain processing order, the certain processing order starting with a first sub-partition, and
- predict a sub-partition, which follows the first sub-partition, using one or more reference samples from one or at least two different reference areas of at least three reference areas.

The technical solutions provided according to embodiments of the present disclosure have the following beneficial effects.

In prior art approaches, only two reference areas (above + left of the current block or left of the current block + predicted sub-partition above) are available for selecting the reference samples for the prediction of a sub-partition which may not be optimal for the prediction. By allowing to select from three or more areas one (uni-prediction) or at least two different (bi- or multi-prediction) reference areas from which the reference or reconstructed sample are obtained the prediction is improved.

It is to be understood that the content described in this section is not intended to identify key or critical features of the embodiment of the present disclosure, nor is it intended to limit the scope of the present disclosure. Other features of the present disclosure become readily apparent from the following description.

## Brief Description of the Drawings

The drawings are explanatory and serve to explain the present disclosure, and are not to be construed to limit the present disclosure to the illustrated embodiments.

| | |
|---|---|
| Fig. 1 | is a block diagram of a conventional video encoder; |
| Fig. 2 | is a block diagram of a conventional video decoder; |
| Fig. 3(A) and Fig. 3(B) | illustrate examples of partitioning a currently processed block or CU of a picture into a plurality of sub-partitions; |
| Fig. 4 | illustrates template-based intra mode derivation (TIMD) templates for a cost calculation; |
| Fig. 5 | illustrates a template area for a template-based multiple reference line intra prediction (TMRL) mode; |
| Fig. 6(A) | illustrates a flow diagram of a method of processing one or more blocks of a picture using symmetric ISP partitioning with inverse/specific processing order or using asymmetric ISP partitioning with forward/inverse/specific processing order; |
| Fig. 6(B) | illustrates an apparatus of processing one or more blocks of a picture using symmetric ISP partitioning with inverse/specific processing order or using asymmetric ISP partitioning with forward/inverse/specific processing order; |
| Fig. 7 | illustrates using symmetric ISP partitioning with an inverse processing order; |
| Fig. 8(A) and Fig. 8(B) | illustrate examples of a very narrow block CU using an inverse processing order; |
| Fig. 9 | illustrates using symmetric ISP partitioning with a specific processing order; |
| Fig. 10 | illustrates an asymmetric ISP partitioning with inverse processing order; |
| Fig. 11 | illustrates another example of an asymmetric ISP partitioning with inverse processing order; |
| Fig. 12 | illustrates reference samples of an original block that may be used for predicting a bottom/-right-most sub-partition of a block which has been asymmetrically partitioned; |
| Fig. 13 | illustrates the asymmetrically partitioned block of Fig. 12 in which the a bottom/right-most sub-partition has size of one row/column of samples; |
| Fig. 14 | illustrates a virtual sub-partition extension; |
| Fig. 15 | illustrates a block diagram of an apparatus of processing one or more blocks of a picture in accordance with embodiments of the present disclosure; |
| Fig. 16(A) to Fig. 16(D) | illustrate an example of symmetric ISP partitioning and the reference samples used for an intra prediction; |
| Fig. 17(A) to Fig. 17(E) | illustrates a symmetric ISP partitioning and the available reference areas for selecting the reference samples for the intra prediction in accordance with embodiments of the present disclosure. |
| Fig. 18 | illustrates an asymmetric ISP with a vertical split mode and an inverse processing order in accordance with embodiments of the present disclosure; |
| Fig. 19 | illustrates a symmetric ISP with a horizontal split mode and an inverse processing order in accordance with embodiments of the present disclosure; |
| Fig. 20 | illustrates a bi-prediction process in symmetric ISP partitioning with a forward processing |

order in accordance with embodiments of the present disclosure;

Fig. 21 illustrates a bi-prediction process in symmetric ISP partitioning with a forward processing order in accordance with further embodiments of the present disclosure;

Fig. 22 illustrates a symmetric ISP with a horizontal split mode and an inverse processing order in accordance with embodiments of the present disclosure;

Fig. 23 illustrates a flow diagram of a method for decoding an encoded data stream in accordance with embodiments of the present disclosure;

Fig. 24 illustrates a flow diagram of a method for encoding a picture into an encoded data stream in accordance with embodiments of the present disclosure;

Fig. 25 illustrates a block diagram of an apparatus of processing one or more blocks of a picture in accordance with embodiments of the present disclosure;

Fig. 26 illustrates a block diagram of a decoder for decoding an encoded data stream in accordance with embodiments of the present disclosure;

Fig. 27 illustrates a block diagram of an encoder for encoding a picture into an encoded data stream in accordance with embodiments of the present disclosure;

Fig. 28 illustrates a data stream in accordance with embodiments of the present disclosure; and

Fig. 29 illustrates a block diagram illustrating an electronic device according to embodiments of the present disclosure.

## Detailed Description

Illustrative embodiments of the present disclosure are described below with reference to the drawings, where various details of the embodiments of the present disclosure are included to facilitate understanding and are to be considered as illustrative only. Accordingly, those of ordinary skill in the art recognize that various changes and modifications of the embodiments described herein can be made without departing from the scope of the present disclosure. Also, descriptions of well-known functions and constructions are omitted from the following description for clarity and conciseness.

In the present disclosure, the term "and/or" is intended to cover all possible combinations and sub-combinations of the listed elements, including any one of the listed elements alone, any sub-combination, or all of the elements, and without necessarily excluding additional elements.

In the present disclosure, the phrase "at least one of...or..." is intended to cover any one or more of the listed elements, including any one of the listed elements alone, any sub-combination, or all of the elements, without necessarily excluding any additional elements, and without necessarily requiring all of the elements.

In the present disclosure, the term "coding" refers to "encoding" or to "decoding" as becomes apparent from the context of the described embodiments. Likewise, the term "coder" refers to "an encoder" or to "a decoder".

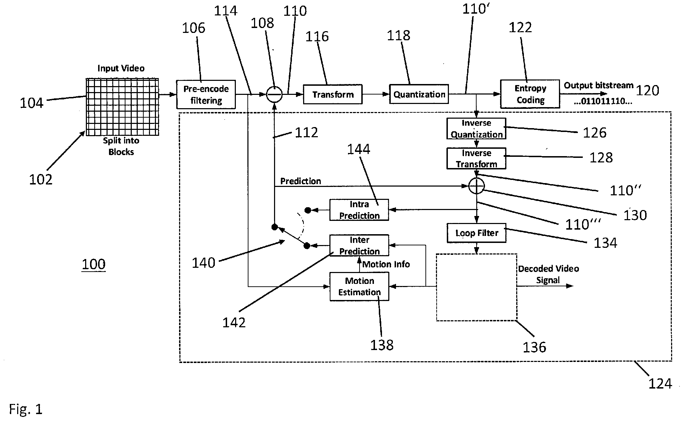

A block diagram of a standard video compression system 100 operating in accordance with the VVC standard is illustrated in Fig. 1. The standard video coder 100 compresses and encodes a picture 102 of a video sequence. The picture 102 to be encoded is partitioned into blocks 104 also referred to as coding units, CUs. The encoder 100 comprises a pre-encode filter 106 and a prediction residual signal former 108 which generates a prediction residual signal 110 so as to measure a deviation of a prediction signal 112 from the signal 114 output by the filter 106. The encoder further comprises a transformer 116, a quantizer 118 and provides an output bitstream or data stream 120 using an entropy coder 122. Further, the encoder 100 comprises a prediction stage 124 for determining the prediction signal 112, which includes a de-quantizer or inverse quantizer 126, an inverse transformer 128, a combiner 130, an in-loop filter 134, a picture buffer 136, a motion estimator 138, an intra/inter mode selector 140, an inter predictor 142 and an intra predictor 144.

The video coder 100 as described with reference to Fig. 1 compresses and encodes a picture 102 of a video sequence as follows. The picture 102 to be encoded is partitioned into the blocks or CUs 104. Each coding unit 104 is encoded using either an intra or inter coding mode. When a CU is encoded in the intra mode, intra prediction is performed by the intra predictor 144. The intra prediction comprises predicting the current CU 114 being encoded by means of already coded, decoded and reconstructed picture samples located around the current CU, e.g., on the top and on the left of the current CU. The intra prediction is performed in the spatial domain. In an inter mode, motion compensation and motion estimation are performed by the motion estimator 138 which searches, in one or more reference pictures provided by the picture buffer 136 and used to predictively code the current picture, a CU that is a good predictor of a current CU. For example, a good predictor of a current CU is a predictor which is similar to the current CU, i.e., the distortion between the two CUs is low or below a certain threshold. The motion estimation may also account for the rate cost of signaling the predictor to optimize a rate-distortion tradeoff. The output of the motion estimation step is one or more motion vectors and reference indices associated with the current CU. The motion compensation then predicts the current CU by means of the one or more motion vectors and reference pictures indices as determined by the motion estimator 138. Basically, the block or CU contained in the selected reference picture and pointed to by the determined motion vector is used as the prediction block for the current CU. The encoder 100, by means of the selector 140, selects one of the intra coding mode or the inter coding mode to use for encoding the CU and indicates the intra/inter decision, for example, by means of a prediction mode flag. Prediction residuals are calculated, for example, by subtracting the predicted block from the original image block. Prediction residuals 110 are then transformed and quantized by blocks 116 and 118, and the quantized transform coefficients as well as the motion vectors and other syntax elements are entropy encoded and written into the output bitstream 120. The encoder 100 may skip the transform stage 116 and apply the quantization directly to the non-transformed residual signal 110 in a so-called transform-skip coding mode. After a block or CU has been encoded, the encoder decodes the CU and reconstructs it so as to obtain the reconstructed signal 110‴ that may serve as a reference data for predicting future CUs or blocks to encode. The quantized transform coefficients 110' are de-quantized and inverse transformed leading to a decoded prediction CU or block 110", and the decoded prediction residuals and the predicted block are then combined at 130, typically summed, so as to provide the reconstructed block or CU 110‴. The in-loop filters 134 are applied to the reconstructed picture to reduce compensation artifacts. For example, a deblocking filter, a sample adaptive offset, SAO, filter, and an adaptive loop filter, ALF, may be applied to reduce encoding artifacts. The filtered picture is stored in the buffer 136, also referred to as the decoded picture buffer, DPB, so that it may be used as a reference picture for coding subsequent pictures.

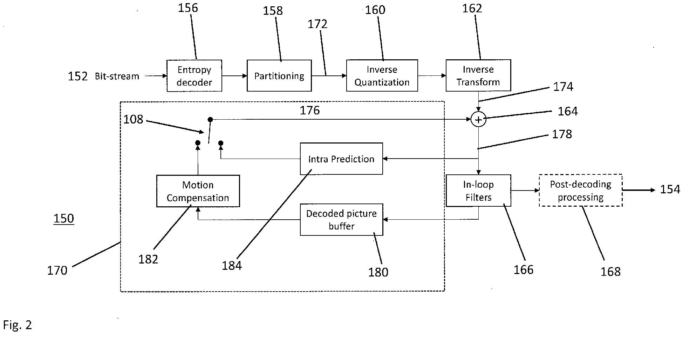

Fig. 2 is a block diagram of a video decoder 150 for predictively decoding from a data or bitstream 152 a picture or video which is provided at an output 154 of the decoder 150. The decoder 150 includes an entropy decoder 156, a partitioning block 158, an inverse quantizer 160, an inverse transformer 162, a combiner 164, an in-loop filter 166, optionally a post-decoding processor 168, and a prediction module 170. The prediction module 170 includes a decoded picture buffer 180 a motion compensator 182 an intra predictor 184.

An encoded picture of a video sequence is decompressed and decoded by the decoder 150 as follows. The input bitstream 152 is entropy decoded by the decoder 156 which provides, for example, the block partitioning information, the coding mode for each coding unit, the transform coefficients contained in each transform block, prediction information, like intra prediction mode, motion vectors, reference picture indices, and other coding information. The block partitioning information indicates how the picture is partitioned and the decoder 150 may divide the input picture into coding tree units, CTUs, typically of a size of 64x64 or 128x128 pixels and divide each CTU into rectangular or square coding units, CUs, according to the decoded partitioning information. The entropy decoded quantized coefficients 172 are de-quantized 160 and inverse transformed 162 so as to obtain the decoded residual picture or CU 174. The decoded prediction parameters are used to predict the current block or CU, i.e., whether the predicted block is to be obtained through its intra prediction or through its motion-compensated temporal prediction. The prediction process performed at the decoder side is the same as the one performed at the encoder side. The decoded residual blocks 174 are added to the predicted block 176, thereby yielding the reconstructed current image block 178. The in-loop filters 166 are applied to the reconstructed picture or image which is also stored in the decoded picture buffer 180 to serve with the reference picture for future pictures to decode. As mentioned above, the decoded picture may further go through a post-decoding processing, for example for performing an inverse color transformation, for example a conversion from YcbCr 4:2:0 to RGB 4:4:4.

In all above processes, the entropy (de)coding of syntax elements representing encoder decisions such as block partitioning information, prediction modes/parameters, quantized transform coefficients, etc. may be carried out by using a context-adaptive entropy coder, such as Context-Adaptive Binary Arithmetic Coding (CABAC). To use CABAC, each syntax element is first binarized to be represented with a series of bins. Then each bin is associated with a CABAC context model that keeps track of binary values of that particular bin in the past, in order to more efficiently model its probability distribution.

Description of relevant tools in Enhanced Compression Model (ECM)

A brief description of relevant ECM tools is provided here. More information may be obtained from the JVET-AG2025 and JVET-T2002 documents.

*Intra sub-partitions (ISP)*

The intra sub-partitions (ISP) divides luma intra-predicted blocks vertically or horizontally into 2 or 4 sub-partitions depending on the block size. For example, a minimum block size for ISP is $4 \times 8$ (or $8 \times 4$). If the block size is greater than $4 \times 8$ (or $8 \times 4$) then the corresponding block is divided into 4 sub-partitions. It has been noted that $M \times 128$ (with $M \leq 64$) and $128 \times N$ (with $N \leq 64$) ISP blocks may generate a potential issue with the $64 \times 64$ VDPU (Virtual Pipeline Data Unit - VPDUs are defined as non-overlapping M×M-luma(L)/NxN-chroma(C) units in a picture. In hardware decoders, successive VPDUs are processed by multiple pipeline stages at the same time; different stages process different VPDUs simultaneously). For example, an $M \times 128$ CU in the single tree case has an $M \times 128$ luma TB (Transform Block) and two corresponding $\frac{M}{2} \times 64$ chroma TBs. If the CU uses ISP, then the luma TB will be divided into four $M \times 32$

TBs (only the horizontal split is possible), each of them smaller than a 64 × 64 block. However, in the current design of ISP chroma blocks are not divided. Therefore, both chroma components will have a size greater than a 32 × 32 block. Analogously, a similar situation may be created with a 128 × *N* CU using ISP. Hence, these two cases are an issue for the 64 × 64 decoder pipeline. For this reason, the CU sizes that can use ISP is restricted to a maximum of 64 × 64.

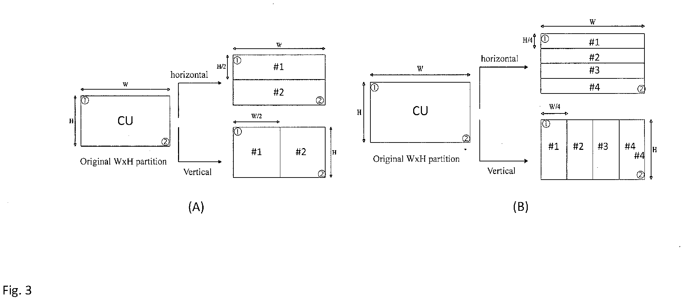

Fig. 3(A) and Fig. 3(B) illustrate examples of partitioning a currently processed block or CU of a picture into a plurality of sub-partitions, with all sub-partitions fulfilling the condition of having at least 16 samples.

Fig. 3(A) illustrates the horizontal and vertical partitioning of 4×8 and 8×4 CUs into two sub-partitions. The current block CU has a block size of W×H samples (width W = 4 or 8 samples, height H = 8 or 4 samples). When horizontally partitioning the current block CU, the two horizontal sub-partitions #1, #2 each have a sub-partition size of W×(H/2). When vertically partitioning the current block into two vertical sub-partitions #1, #2, each vertical sub-partition has a sub-partition size of (W/2)×H.

Fig. 3(B) illustrates the horizontal and vertical partitioning of CUs other than 4×8, 8×4 and 4×4 into four sub-partitions. The current block CU has a block size of W×H samples (width W > 4 or 8 samples, height H > 8 or 4 samples). When horizontally partitioning the current block CU, the four horizontal sub-partitions #1, #2, #3 and #4, each have a sub-partition size of W×(H/4). When vertically partitioning the current block into four vertical sub-partitions #1, #2, #3 and #4, each vertical sub-partition has a sub-partition size of (W/4)×H.

For intra-predicting the CU, the plurality of sub-partitions #1 and #2 (Fig. 3(A)) or #1 to #4 (Fig. 3(B)) are predicted using a forward processing order. The forward processing order predicts the plurality of sub-partitions in a sequence from a start sub-partition #1 to an end sub-partition #2 or #4). The start sub-partition #1 includes a top-left sample ① of the current block CU and the end sub-partition #2 or #4 includes a bottom-right sample ② of the current block CU. Thus, the processing order in Fig. 3(A) is sub-partition #1 → sub-partition #2, and in Fig. 3(B) the processing order is sub-partition #1 → sub-partition #2 → sub-partition #3 → sub-partition #4.

In ISP, the dependence of 1×N/2×N subblock prediction or sub-partition prediction on the reconstructed values of previously decoded 1×N/2×N subblocks of the coding block is not allowed so that the minimum width of prediction for subblocks becomes four samples. For example, an 8×N (N > 4) coding block that is coded using ISP with vertical split is split into two prediction regions each of size 4×N and four transforms of size 2×N (see Fig. 3(A) for N=2). Also, a 4×N coding block that is coded using ISP with vertical split is predicted using the full 4×N block, with four transforms, each of 1×N, being used. Although the transform sizes of 1×N and 2×N are allowed, it is asserted that the transform of these blocks in 4×N regions may be performed in parallel. For example, when a 4×N prediction region contains four 1×N transforms, there is no transform in the horizontal direction; the transform in the vertical direction can be performed as a single 4×N transform in the vertical direction. Similarly, when a 4×N prediction region contains two 2×N transform blocks, the transform operation of the two 2×N blocks in each direction (horizontal and vertical) can be conducted in parallel. Thus, there is no delay added in processing these smaller blocks than processing 4×4 regular-coded intra blocks.

For each sub-partition, reconstructed samples are obtained by adding the residual signal to the prediction signal. Here, a residual signal is generated by a processes such as entropy decoding, inverse quantization and inverse transform. Therefore, the reconstructed sample values of each sub-partition are available to generate the prediction of the next sub-partition, and each sub-partition is processed repeatedly. As stated above, the first sub-partition to be processed (e.g., sub-partition #1 in Fig.3(A) and Fig.3(B)) is the one containing the top-left sample ① of the CU and then continuing downwards (horizontal split) or rightwards (vertical split). As a result, the reference samples used to generate the sub-partitions prediction signals are only located at the left and above sides of the lines. All sub-partitions share the same intra mode.

The following is a summary of the interaction of ISP with other coding tools.

- Multiple Reference Line (MRL):

If a block has an MRL index other than 0, then the ISP coding mode will be inferred to be 0 and therefore ISP mode information will not be sent to the decoder.

- Entropy coding coefficient group size:

The sizes of the entropy coding subblocks have been modified so that they have 16 samples in all possible cases, as shown in the table below. Note that the new sizes only affect blocks produced by ISP in which one of the dimensions is less than 4 samples. In all other cases coefficient groups keep the 4x4 dimensions.

**Table - Entropy coding coefficient group size**

| Block Size | Coefficient group Size |
|---|---|
| **1 × *N*, *N* ≥ 16** | 1 × 16 |
| ***N* × 1, *N* ≥ 16** | 16 × 1 |
| **2 × *N*, *N* ≥ 8** | 2 × 8 |
| ***N* × 2, *N* ≥ 8** | 8 × 2 |

(continued)

| Block Size | Coefficient group Size |
|---|---|
| All other possible $M \times N$ cases | $4 \times 4$ |

- CBF (Coded Block Flag) coding:
It is assumed that at least one of the sub-partitions has a non-zero CBF. Hence, if $n$ is the number of sub-partitions and the first $n$ - 1 sub-partitions have produced a zero CBF, then the CBF of the n-th sub-partition is inferred to be 1.
- Transform size restriction:
All ISP transforms with a length larger than 16 points uses the DCT-II.
- MTS (Multi Transform Selection) flag:
If a CU uses the ISP coding mode, the MTS CU flag will be set to 0 and it will not be sent to the decoder. Therefore, the encoder will not perform RD tests for the different transforms for each resulting sub-partition. The transform choice for the ISP mode will instead be fixed and selected according the intra mode, the processing order and the block size utilized. Hence, no signalling is required. For example, let $t_H$ and $t_V$ be the horizontal and the vertical transforms selected respectively for the $w \times h$ sub-partition, where w is the width and $h$ is the height. Then the transform is selected according to the following rules:

    ◦ If w = 1 or $h$ = 1, then there is no horizontal or vertical transform respectively.
    ◦ If $w \geq 4$ and w $\leq 16$, $t_H$ = DST-VII, otherwise, $t_H$ = DCT-II
    ◦ If $h \geq 4$ and $h \leq 16$, $t_V$ = DST-VII, otherwise, $t_V$ = DCT-II

In ISP mode, all 67 intra modes are allowed. PDPC (Position Dependent intra Prediction Combination) is also applied if a corresponding width and height is at least 4 samples long. In addition, the reference sample filtering process (reference smoothing) and the condition for intra interpolation filter selection does not exist, and a Cubic (DCT-IF) filter is always applied for fractional position interpolation in ISP mode.

*Decoder side intra mode derivation (DIMD)*

When DIMD is applied, up to five intra modes are derived from the reconstructed neighbor samples, and those five predictors are combined with the nondirectional predictor (planar or block vector based predictor) with weights derived from the histogram of gradients as described in JVET-O0449. The decision between the nondirectional modes is taken according to the template cost. Specifically, the block vectors of all adjacent and non-adjacent merge candidates (coded in intra template matching prediction (IntraTMP) or intra clock copy (IBC)) are compared to a planar prediction on the reconstructed template. The template cost (sum of absolute transform difference, SATD) is used to select the best predictor among them.
The division operations in weight derivation are performed utilizing the same lookup table (LUT) based integerization scheme used by the Cross-Component Linear Model, CCLM. For example, the division operation in the orientation determination

$$Orient = G_y/G_x$$

is obtained, e.g., computed by the following LUT-based scheme:

$$x = \text{Floor}(\text{ Log2}(\text{ Gx }))$$

$$normDiff = ((\text{ Gx} << 4) >> x) \& 15$$

$$x += (3 + (normDiff \neq 0) ? 1 : 0)$$

$$Orient = (Gy * (\text{ DivSigTable}[normDiff] \mid 8) + (1 << (x-1))) >> x$$

where

$$\text{DivSigTable}[16] = \{\ 0,\ 7,\ 6,\ 5\ ,5,\ 4,\ 4,\ 3,\ 3,\ 2,\ 2,\ 1,\ 1,\ 1,\ 1,\ 0\ \}.$$

For a block of size $W \times H$, the weight for each of the five derived modes is modified if one of the above or left histogram magnitudes is twice larger than the other one. In this case, the weights are location dependent and computed as follows:

If the above histogram is twice the left, then:

$$w_i(x, y) = wDimd_i + \Delta_i - 2\Delta_i \frac{y}{(H-1)}.$$

If the left histogram is twice the above, then:

$$w_i(x, y) = wDimd_i + \Delta_i - 2\Delta_i \frac{x}{(W-1)},$$

where *wDimd$_i$* is the unmodified uniform weight of the DIMD selected as in JVET-O0449, $\Delta_i$ is pre-defined and set to 10.

The derived intra modes are included into a primary list of intra most probable modes (MPM), so the DIMD process is performed before the MPM list is constructed. The primary derived intra mode of a DIMD block is stored with a block and is used for MPM list construction of the neighboring blocks.

Finally, note that the region of neighboring reconstructed samples used for computing the histogram of gradients is modified compared to the JVET-O0449 method, depending on reconstructed samples availability. The region of decoded reference samples of a current WxH luma CB is extended towards the above-right side if available, up to W additional columns. It is extended towards the bottom-left side if available, up to H additional rows.

*Fusion for template-based intra mode derivation (TIMD)*

For each intra prediction mode in the MPMs, as well as the wide-angle modes if the above-right and/or bottom-left reference samples are available, the SATD between the prediction and reconstruction samples of the template is obtained. First two intra prediction modes with the minimum SATD and one non-angular intra prediction mode (i.e. DC or Planar) with the lowest SATD cost are selected as the TIMD modes. These three TIMD modes are fused with the weights after applying the position dependent intra prediction combination (PDPC) process, and such weighted intra prediction are used to code the current CU. The PDPC is included in the derivation of the TIMD modes.

The conditions below are checked to determine whether the non-angular intra prediction mode is used in fusion:

- The non-angular intra prediction mode is different from the two selected intra prediction modes.
- costMode3 < 1.5*costMode1, where the costMode3 is the SATD cost of the non-angular intra prediction mode and costMode1 is the SATD cost of the first intra prediction mode.

If both of the conditions are true, three intra prediction modes are used to generate the prediction. And the weights of each intra prediction mode are computed from SATD cost:

$$weight_i = \frac{sumSATD - costMode_i}{2 \times sumSATD}, \quad sumSATD = \sum_{j=1}^{3} costMode_i.$$

Otherwise, the non-angular intra prediction mode is not used in the prediction.

The costs of the two selected modes are compared with a threshold, and the cost factor of 2 may be applied as follows:

$$costMode2 < 2*costMode1.$$

If this condition is true, the fusion is applied, otherwise the only model is used.

The weights of the modes are computed from their SATD costs as follows:

$$weight1 = costMode2\ /\ (costMode1 + costMode2)$$

$$weight2 = 1 - weight1$$

The division operations are conducted using the same lookup table (LUT) based integerization scheme used by the CCLM.

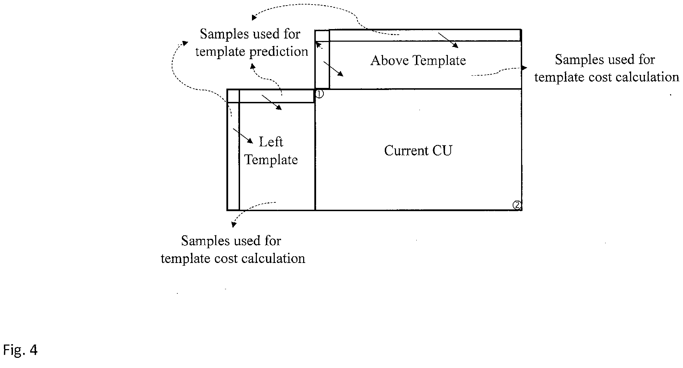

Besides, a location-dependent sample-based fusion used in a DIMD fusion process is used for the TIMD fusion but the location-dependent criterion applying to amplitudes of the selected predictors is replaced by a SATD cost-based criteria. The location-dependent criterion is determined from a ratio of the normalized SATD of the selected TIMD predictors computed in above and left template area shown in Fig. 4 illustrating the TIMD templates for the cost determination or calculation.

*Template-based multiple reference line intra prediction*

The template-based multiple reference line intra prediction (TMRL) mode combines reference line and prediction mode together and uses a template matching method to construct a list of candidate combinations. An index to the candidate combination list is coded to indicate which reference line and prediction mode is used in coding the current block. The regular multiple reference line (MRL) for the non-TIMD part is replaced by TMRL mode.

The TMRL mode extends the reference line candidate list and the intra-prediction-mode candidate list. The extended reference line candidate list is {1, 3, 5, 7, 12}. The restriction on the top CTU row is unchanged. The size of the intra-prediction-mode candidate list is 10. The construction of the intra-prediction-mode candidate list is similar to MPM except the PLANAR mode is excluded from the intra-prediction-mode candidate list, DC mode is added after 5 neighboring PUs' modes and DIMD modes if it's not included and the angular modes with delta angles from $\pm1$ to $\pm4$ (compared the existing angular modes in the intra-prediction-mode candidate list) are added. The precision of angular prediction is extended from 65 to 129. Additionally non-adjacent positions are added as candidates in constructing the intra candidate list. If the neighbouring or non-adjacent blocks are coded with SGPM (Spatial Geometric Partition Mode)or GPM (Geometric Partitioning Mode), the intra modes of the blocks are replaced by the partitioning angles.

The TMRL candidate is constructed as follows. There are 5x10=50 combinations of the extended reference line and the allowed intra-prediction modes for a block. Since the extended reference line starts from reference line 1, the area covered by reference line 0 is used for template matching. The SAD costs over the template area are calculated between the predictions (generated by 50 combinations) and the reconstructions. The 20 combinations with the least SAD cost are selected in an ascending order to form the TMRL candidate list.

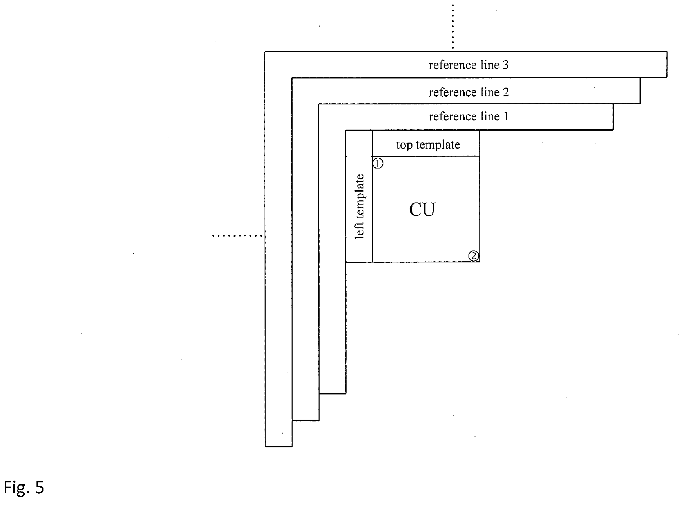

Fig. 5 illustrates the template area for the TMRL mode. Regarding TMRL signaling, instead of coding the reference line and the intra mode directly, an index to the TMRL candidate list is coded to indicate which combination of reference line and prediction mode is used for coding the current block.

*Flexible Intra sub-partition (ISP) mode*

Typically, intra prediction modes tend to provide a more accurate prediction of the samples that are closer to the block boundary reference sample, i.e., the left and above block regions, and a less accurate prediction for samples toward the right and bottom area of the block as there are no available reference samples for prediction. Thus, in many intra-coded blocks, most of the residual energy are located in the bottom-right area of the block.

The intra sub-partitioning (ISP) mode in VVC aims at compensating the above mentioned inaccurate sample predictions in a block by splitting the block into multiple sub-partitions and predicting each sub-partition samples from previously reconstructed sub-partition samples, as described above with reference to Fig. 3(A) and Fig.3(B). Even though the conventional ISP method may provide better a prediction performance, it has the following drawbacks which makes its performance sub-optimal:

- The size of sub-partitions within the block is the same which may result in a redundant splitting of the block which geos together with an extra signaling overhead.
- The sub-partitions are always symmetric which may result in redundant splitting of the block which geos together with extra signaling overhead.
- The processing order of sub-partitions is always from left to right (in vertical ISP mode - Fig.3(B)) and from top to bottom (in horizontal ISP mode - Fig.3(A)). This way of processing is also referred to as a forward processing order which may not be optimal if the block content in bottom-right area is different than in other areas of the block.

Stated differently, conventionally, a CU or block is symmetrically partitioned using ISP, and the sample prediction uses the froward processing order starting with the sub-partition including the top-left sample of the block, which, in certain situation, may not be optimal for the prediction.

European Patent Application EP24315484.6 titled "Method and apparatus for processing sub-partitions of a block of a picture" and filed on October 18, 2024, which is hereby incorporated by reference, describes approaches which address the above drawbacks of convention al ISP approaches by allowing for an inverse or specific processing order (instead of the forward processing order), or for asymmetric sub-partitions (instead of symmetric partitions). More specifically, examples for improving the performance of the intra sub-partitioning (ISP) mode are provided. Various aspects for improving the ISP method performance are provided, e.g., using an inverse or specific processing order of sub-partitions, and/or using asymmetric sub-partitions. The specific processing order may also be referred to as a random processing order.

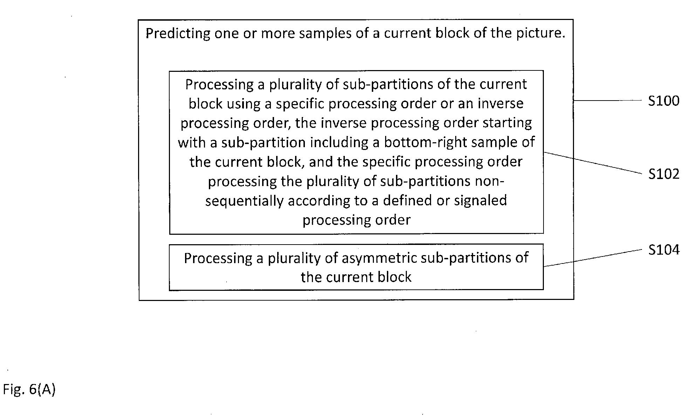

Fig. 6(A) illustrates a flow diagram of a method of processing one or more blocks of a picture. The method includes the following:

S100: Predicting one or more samples of a current block of the picture.
Predicting the one or more samples of the current block includes one or more of the following:

S102: Processing a plurality of sub-partitions of the current block using a specific processing order or an inverse processing order, the inverse processing order starting with a sub-partition including a bottom-right sample of the current block, and the specific processing order processing the plurality of sub-partitions non-sequentially according to a defined or signaled processing order.
S104: Processing a plurality of asymmetric sub-partitions of the current block.

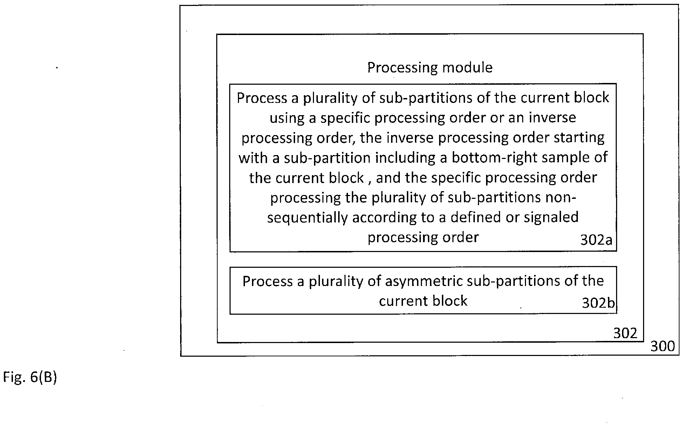

Fig. 6(B) illustrates a block diagram of an apparatus of predicting one or more blocks of a picture. The apparatus 300 includes the following modules:

302: A processing module configured to predict one or more samples of a current block of the picture.
For predicting the one or more samples of the current block, the processing module is configured to perform one or more of the following:

302a: Process a plurality of sub-partitions of the current block using a specific processing order or an inverse processing order, the inverse processing order starting with a sub-partition including a bottom-right sample of the current block, and the specific processing order processing the plurality of sub-partitions non-sequentially according to a defined or signaled processing order.
302b: Process a plurality of asymmetric sub-partitions of the current block.

*(a) ISP mode with inverse processing order*

Conventionally, the processing order of the existing ISP method follows a forward processing order when (de) coding the sub-partitions of a CU or current block. For example, in a horizontal ISP mode, i.e., when the current block is partitioned into a plurality (two or more) horizontal sub-partitions, with each horizontal sub-partition having the same width, the sub-partitions are processed sequentially from top to bottom sub-partitions. In a vertical ISP mode, i.e., when the current block is partitioned into a plurality (two or more) vertical sub-partitions, with each vertical sub-partition having the same height, the sub-partitions are processed sequentially from left to right. However, as mentioned above, there may be certain situations, in which using the forward processing order may not be optimal for the prediction.

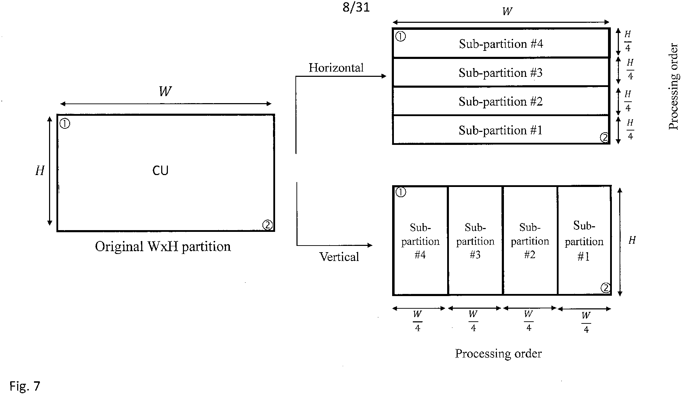

An inverse processing order may be used when (de)coding the sub-partitions. Fig. 7 illustrates using symmetric ISP partitioning with an inverse processing order. In Fig. 7 the current block CU has a block size of $W \times H$ samples (width W > 4 or 8 samples, height H > 8 or 4 samples) which is horizontally or vertically partitioned into four horizontal or vertical sub-partitions as described above with reference to Fig. 3(b). Each horizontal sub-partition has a sub-partition size of $W \times (H/4)$, and each vertical sub-partition has a sub-partition size of $(W/4) \times H$. For intra-predicting the CU, the plurality of sub-partitions are predicted using an inverse processing order. The inverse processing order predicts the plurality of sub-partitions in a sequence from the start sub-partition #1 to the end sub-partition #4. The start sub-partition #1 includes the bottom-right sample ② of the current block CU and the end sub-partition #4 includes the top-left sample ① of the current block CU. Thus, other than in conventional processes, the processing order sub-partition #1 → sub-partition #2 → sub-partition #3 → sub-partition #4 is as follows:

-   When horizontally partitioning the current block: from the bottom sub-partition (sub-partition #1) to the top sub-partition (sub-partition #4).
-   When vertically partitioning the current block: from the right-most sub-partition (sub-partition #1) to the left-most sub-partition (sub-partition #4).

The benefit of the inverse processing order is that since the bottom sub-partition (in horizontal ISP) and right-most sub-partition (in vertical ISP) is (de)coded first, their reconstructed samples may be used for a more efficient prediction of the other sub-partitions.

The inverse processing order may be used when a block size of the current block is smaller than a first threshold. The first threshold may be defined in a specification of a codec used for processing the picture or the current block.

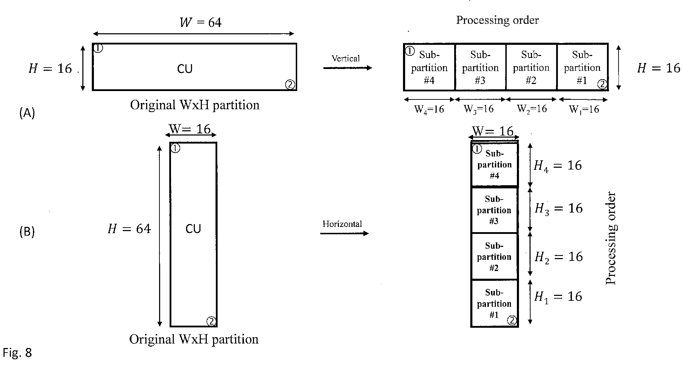

The inverse processing order may be used for very narrow blocks. When the current block has a block size of $W \times H$ samples, with $W = m \times H$ or $H = m \times W$, the inverse processing order may be used, when m is greater than or equal to a defined or signaled value, e.g., 4. The value may be defined in a specification of a codec used for processing the picture or the current block or signaled in a bitstream for ISP-coded blocks. For example, for very narrow block sizes, where one side of the block is much larger than the other side (e.g., width×height is $64 \times 16$ and $16 \times 64$), the inverse processing order may be used whereas for non-narrow block sizes, the forward processing order may be used. In very narrow blocks, the samples towards the end of the block may have a different pattern or texture, thus, in such blocks using inverse processing helps in better prediction of sub-partitions in the narrow end of the block. Fig. 8(A) and Fig. 8(B) illustrate examples of a very narrow block CU using an inverse processing order. Fig. 8(A) illustrates an example of a very narrow block CU with a width×height of $64 \times 16$, which is partitioned vertically into four sub-partitions of width×height of $16 \times 16$. Fig. 8(B) illustrates an example of a very narrow block CU with a width×height of $16 \times 64$, which is partitioned horizontally into four sub-partitions of width×height of $16 \times 16$. Fig. 8(A) and Fig. 8(B) illustrate the inverse processing order from right to left and from bottom to top, respectively.

The use the inverse processing order may be determined implicitly from the block size, e.g., when the block size is smaller than the first threshold or when the current block is very narrow, the current block may be partitioned horizontally or vertically into the plurality of sub-partitions which are then processed using the inverse processing order without explicit signaling, e.g., in a bitstream for ISP-coded blocks.

The use the inverse processing order may be signaled explicitly, e.g., in a bitstream for ISP-coded blocks using a flag or index.

A choice of forward or inverse processing order may be indicated in the bitstream for ISP-coded blocks using a flag or index. Alternatively, the choice of processing order may be determined implicitly using various factors such as the above described block dimensions (height and width).

It may be determined upon (de)coding whether or not the inverse processing order is used for predicting the plurality of sub-partitions, and, in case the inverse processing order is not used, the prediction process may use the specific or random processing order (e.g., when a block size is greater than a second threshold, which is different from the first threshold) or the forward processing order (e.g., when a block size is greater than the first threshold but less than the second threshold).

The above described the use of the inverse processing order for a block that is symmetrically partitioned into four sub-partitions. However, the inverse processing order may also be used for a block that is symmetrically partitioned into less the four sub-partitions, e.g., into two sub-partitions in a way as described above with reference to Fig. 3(A), or into more than four sub-partitions.

The above described the use of the inverse processing order for a block that is symmetrically partitioned. However, the inverse processing order may also be used for a block that is partitioned asymmetrically. Asymmetrically partitioning the current block yields a plurality of sub-partitions, and at least two of the plurality of sub-partitions have different sub-partition sizes. The asymmetrically partitioning mode is described in more detail below.

*(b) ISP mode with specific processing order*

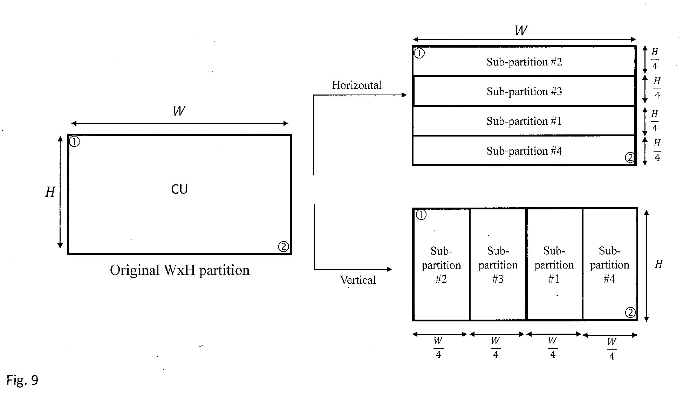

A specific or random processing order may be used when (de)coding the sub-partitions. The specific processing order processes the plurality of sub-partitions non-sequentially according to a defined or signaled processing order. Fig. 9 illustrates using symmetric ISP partitioning with a specific processing order. In Fig. 9 the current block CU has a block size of $W \times H$ samples (width $W > 4$ or 8 samples, height $H > 8$ or 4 samples) which is horizontally or vertically partitioned into four horizontal or vertical sub-partitions as described above with reference to Fig. 3(b). Each horizontal sub-partition has a sub-partition size of $W \times (H/4)$, and each vertical sub-partition has a sub-partition size of $(W/4) \times H$. For intra-predicting the CU, the plurality of sub-partitions are predicted using a specific processing order. The specific processing order predicts the plurality of sub-partitions in a specific sequence from the start sub-partition #1 to the end sub-partition #4. The start sub-partition #1 may or may not include the bottom-right sample ② of the current block CU and the end sub-partition #4 may or may not include the top-left sample ① of the current block CU. In Fig. 9, the bottom-right sample ② of the current block CU is in sub-partition #4, and the top-left sample ① of the current block CU is in sub-partition #2. Thus, other than in conventional processes or when using the inverse processing order, the processing order from sub-partition #1 to sub-partition #4 is as follows:

- When horizontally partitioning the current block: third sub-partition from the top (sub-partition #1) → top sub-partition (sub-partition #2) → second sub-partition from the top (sub-partition #3) → bottom sub-partition (sub-partition #2).

- When vertically partitioning the current block: third sub-partition from the left (sub-partition #1) → left-most sub-partition (sub-partition #2) → second sub-partition from the left (sub-partition #3) → right-most sub-partition (sub-partition #2).

Such a processing or (de)coding order provides additional reference samples for a better prediction performance in the other sub-partitions. For example, sub-partitions #2, #3 and #4 may use reconstructed samples of sub-partition #1 in their prediction process.

Thus, the processing order of the sub-partitions of an ISP block may be done in defined or signaled access fashion and not in a sequentially forward or inverse order, i.e., the specific processing order processes the plurality of sub-partitions non-sequentially according to a defined or signaled processing order.

The specific processing order may be used when a block size of the current block is larger than a second threshold. The second threshold may be defined in a specification of a codec used for processing the picture or the current block. For examples, if one or both of the block dimensions, like width and height, are larger than a certain threshold, like the second threshold, the specific processing order is used.

The benefit of the specific processing order is that it provides a better prediction performance throughout the original block, particularly in large blocks that may have varying texture in different areas of the block. For example, in large blocks there may be multiple objects within the block or the illumination or color change from samples of one area to samples on another area which may not be properly captured by a forward or inverse processing order.

The use the specific processing order may be determined implicitly from the block size., e.g., when the block size is greater than the second threshold the current block may be partitioned horizontally or vertically into the plurality of sub-partitions which are then processed using the specific processing order without explicit signaling, e.g., in a bitstream for ISP-coded blocks.

The use the specific processing order may be signaled explicitly, e.g., in a bitstream for ISP-coded blocks using a flag or index.

A choice of the processing order (forward or inverse or specific) may be indicated in the bitstream for ISP-coded blocks using a flag or index. Alternatively, the choice of processing order may be determined implicitly using various factors such as the above described block dimensions (height and width).

For the current block the order of processing the sub-partitions (processing order) in accordance with the specific processing order may be

- indicated in the bitstream for ISP-coded blocks using a flag or index, or
- defined in a specification of a codec used for processing the current block.

An encoder may include the indication into the bitstream for ISP-coded blocks, and a decoder may retrieve the indication and predict the plurality of sub-partitions according to the retrieved processing order.

It may be determined upon (de)coding whether or not the specific processing order is used for predicting the plurality of sub-partitions, and, in case the specific processing order is not used, the prediction process may use the inverse processing order (e.g., when a block size is smaller than the first threshold, which is different from the second threshold) or the forward processing order (e.g., when a block size is greater than the first threshold but less than the second threshold).

The above described the use of the specific processing order for a block that is symmetrically partitioned into four sub-partitions. However, the specific processing order may also be used for a block that is symmetrically partitioned into less the four sub-partitions, e.g., into two sub-partitions in a way as described above with reference to Fig. 3(A), or into more than four sub-partitions.

The above described the use of the specific processing order for a block that is symmetrically partitioned. However, the specific processing order may also be used for a block that is partitioned asymmetrically. Asymmetrically partitioning the current block yields a plurality of sub-partitions, and at least two of the plurality of sub-partitions have different sub-partition sizes. The asymmetrically partitioning mode is described in more detail below.

*(c) ISP mode with asymmetrically partitioning*

Conventionally, existing ISP methods provide for a symmetrical partitioning of a block, however, as mentioned above, there may be certain situations, in which using a symmetrical partitioning may not be optimal for the prediction. The prediction accuracy of the ISP mode is improved by allowing an asymmetric partitioning of a block in contrast of existing symmetric partitioning methods. Asymmetrically partitioning the current block yields a plurality of sub-partitions, and at least two of the plurality of sub-partitions have different sub-partition sizes. The asymmetric sub-partitions may be processed in forward, inverse or specific processing or access order.

Thus, the above describing the use of the inverse or specific processing order for a block may also be used for a block that is partitioned asymmetrically. The specific processing order may predict the plurality of asymmetric sub-partitions of an asymmetrically block in a specific sequence from a start sub-partition to an end sub-partition, and the inverse processing order may predict the plurality of asymmetric sub-partitions of an asymmetrically block in a sequence from a first start sub-partition to a first end sub-partition, the first start sub-partition being the sub-partition including the bottom-right sample of the current block and the first end sub-partition including a top-left sample of the current block.

As mentioned, also a forward processing order may be used for predicting the asymmetric sub-partitions of an asymmetrically block. The forward processing order predicts the plurality of sub-partitions in a sequence from a second start sub-partition to a second end sub-partition, the second start sub-partition including a top-left sample of the current block and the second end sub-partition including a bottom-right sample of the current block.

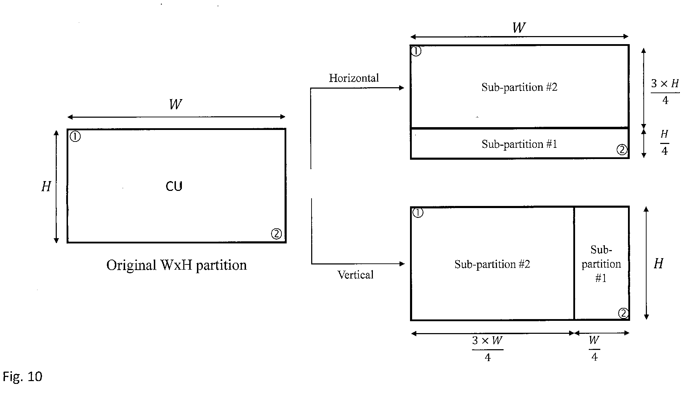

Fig. 10 illustrates an asymmetric ISP partitioning with inverse processing order. A current block CU of the size W×H is divided or partitioned into two sub-partitions #1, #2 horizontally or vertically, where the sub-partitions are not symmetric. More specifically, the top horizontal sub-partition (sub-partition #2) has a sub-partition size of W×(3H/4) and the bottom horizontal sub-partition (sub-partition #1) has a sub-partition size of W×(H/4), and the left-most vertical sub-partition has a sub-partition size of (3W/4)×H and the right-most vertical sub-partition has a sub-partition size of (W/4)×H. For intra-predicting the CU, the plurality of sub-partitions are predicted using the above-described inverse processing order so that the processing order of sub-partitions is as follows:

- Horizontal split: sub-partition #1, which is located in the bottom border of the current or original block and includes the bottom-right sample ②, is (de)coded prior to sub-partition #2, which is located at the above border of the current block and includes the top-left sample ①.
- Vertical split: sub-partition #1, which is located at the right border of the original block and includes the bottom-right sample ②, is (de)coded prior to sub-partition #2,which is located in the left area of the block and includes the top-left sample ①.

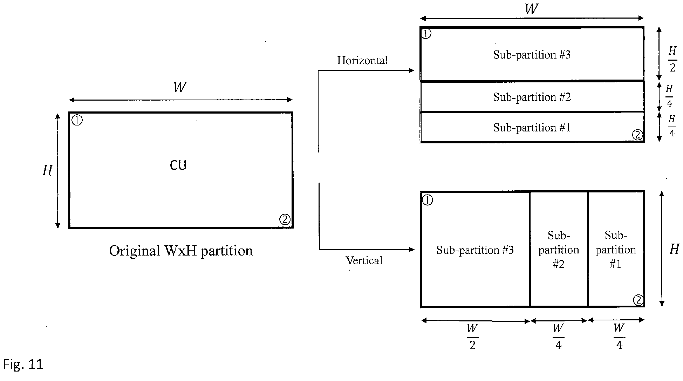

Fig. 11 also illustrates an asymmetric ISP partitioning with inverse processing order. A current block CU of the size W×H is divided or partitioned into three sub-partitions #1, #2, #3 horizontally or vertically, where the sub-partitions are not symmetric. More specifically, the top horizontal sub-partition (sub-partition #3) has a sub-partition size of W×(H/2) and each of the middle and bottom horizontal sub-partitions (sub-partitions #2and #1) has a sub-partition size of W×(W4). The left-most vertical sub-partition (sub-partition #3) has a sub-partition size of (W/2)×H and each of the middle and right-most vertical sub-partitions (sub-partitions #2 and #1) has a sub-partition size of (W/4)×H. For intra-predicting the CU, the plurality of sub-partitions are predicted using the above-described inverse processing order so that the processing order of sub-partitions is as follows:

- Horizontal split: sub-partition #1 (bottom sub-partition including the bottom-right sample ② of the current block CU) → sub-partition #2 (middle sub-partition) → sub-partition #3 (top sub-partition including the top-left sample ① of the current block CU).
- Vertical split: sub-partition #1 (right sub-partition including the bottom-right sample ② of the current block CU) → sub-partition #2 (middle sub-partition) → sub-partition #3 (left sub-partition including the top-left sample ① of the current block CU).

The benefit of this asymmetrically partitioning the block and using the inverse processing order is that, for example in Fig 10, the sub-partition #2, which represent a larger area of samples within the original block, may use reconstructed samples of sub-partition #1, instead of or in addition to the typical reference samples in above and left side of the original block boundaries, for a more efficient prediction.

The size of the sub-partitions may vary depending on the block size and dependent on whether a horizontal or vertical partitioning mode is applied. The size of the sub-partitions may be determined implicitly or explicitly, e.g., at the decoder side. For example, one flag may be signaled for indicating the horizontal/vertical split direction, and another flag or index may indicate the granularity or the number of splits per block. In other examples, for a given block size W×H, the number and granularity of splits as well as their sub-partition sizes may be pre-defined in the underlying codec's specification, and the use of the mode is signaled by an index from the pre-defined set of modes. In yet another examples, the number of sub-partitions and/or the associated sub-partition sizes may be determined to be fixed for a specific block size.

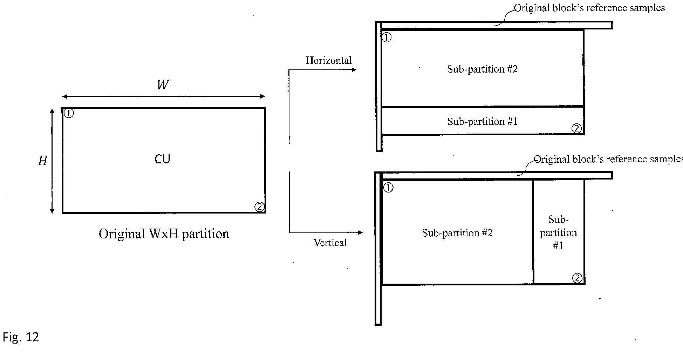

When the processing order of the sub-partitions is reversed, compared to the prior art ISP methods, the first sub-partition #1 in the new processing order may be coded inefficiently. This is due to the fact that sub-#1 partition is only allowed to use reference samples of the original block for the prediction. Since, the spatial distance of the majority of those reference samples to the first sub-partition #1 is large, the prediction accuracy may degrade. Fig. 12 shows the reference samples of the original block that may be used for predicting the first sub-partition. For example, reference samples from above and/or from left of the original block may be used.

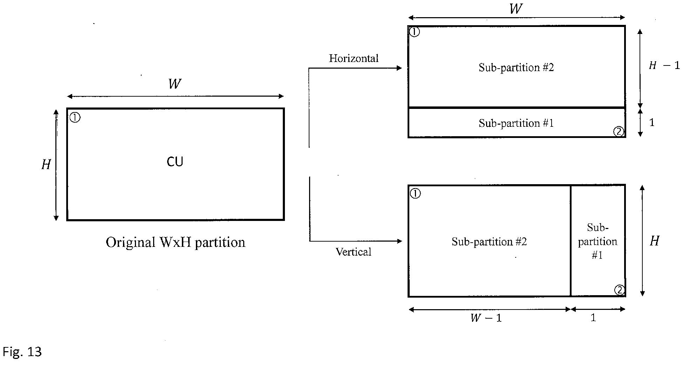

Such an inaccurate prediction may result in a larger bitrate for sub-partition #1 compared to the case when using forward processing order. On the other hand, such inverse processing order improves the prediction accuracy of the other sub-partitions which represent larger areas of the original block. In order to reduce the bitrate required for the first sub-partition, the size of the sub-partition, which includes the bottom-right sample ② of the current block CU (sub-partition #1), is selected to be smaller than the size of any other of the sub-partitions. The size of the sub partition, which includes the bottom-right sample ② of the current block CU, has very small dimensions (horizontally or vertically). For example, the size of the first sub-partition #1 may be a W×1 or W×2 in horizontal split, and 1×H or 2×H in vertical split mode, as is illustrated in Fig. 13 showing an example in which sub-partition #1 has size of one row or line of samples (in case of a horizontal split or partitioning) or one column of samples (in case of a vertical split or partitioning). Sub-partition #2 has a size of W×H-1 or W-lxH, i.e., includes H-1 rows or lines of samples (in case of a horizontal split or partitioning) or W-1 columns of samples (in case of a vertical split or partitioning).

A size of the first sub-partition and consequently the other sub-partitions may depend on one or more factors, e.g., on one or more of the following:

- an original block size of the current block,
- a number of sub-partitions within the current block,
- one or more transform sizes according to the codec used for processing the current block or the current sub-partition.

There may be situations in which an underlying codec does not support the transform for a particular sub-partition size. For addressing such situations, a virtual sub-partition may be created in a size that is supported by the underlying codec. The virtual sub-partition may extend the dimension (horizontally and/or vertically) in order to facilitate a transform coding process. The extended area in the sub-partition may be filled in one or more of the following ways:

- Padded with pre-defined constant values.
- Padded with average values of the sub-partition data.
- Padded with closest prediction samples of the actual sub-partition.
- Padded with reconstructed samples of the next sub-partition.

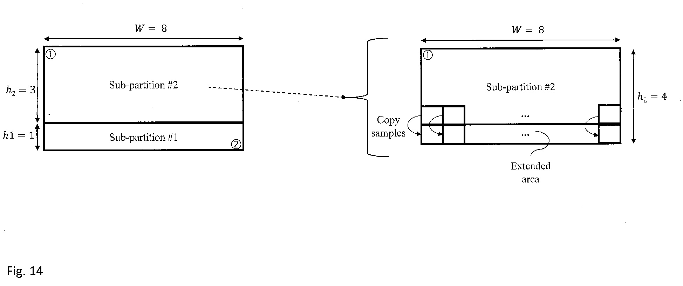

Fig. 14 illustrates a virtual sub-partition extension. An 8×4 block with asymmetric ISP where the two sub-partitions of 8×1 and 8×3 are generated. When assuming that the underlying codec supports a transform size of 8×4, but not a transform size 8×3, a virtual block for sub-partition #2 may be created in which the virtual sub-partition's dimension is extended to a 8×4 size by padding the last row of prediction samples to the extended area. Consequently, the virtual residual block and transform unit may be also generated by similar considerations.

Instead of generating the virtual sub-partition in the coding unit (CU) level or the prediction unit (PU) level, the same dimensions as in original sub-partition may be kept for CU or PU and the virtual block is created only in the transform unit (TU) level. In a transform coefficient (de)coding stage, the codec may avoid (de)coding of the coefficients that fall into the extended area of the sub-partition.

A choice symmetric/asymmetric partitioning and/or of the partitioning mode and/or a number of sub-partitions for the asymmetric partitioning may be indicated in the bitstream for ISP-coded blocks using one or more flags or indices. Alternatively, this choice may be determined implicitly, e.g., from a block size of the current block or in accordance with the codec for processing the current block.

For the current block the partitioning mode and a number of sub-partitions for the asymmetric partitioning of the block may be

- indicated in the bitstream for ISP-coded blocks using a flag or index, or
- defined in a specification of a codec used for processing the current block.

An encoder may include the indication into the bitstream for ISP-coded blocks, and a decoder may retrieve the indication and apply the asymmetric partitioning accordingly.

Now further examples of the flexible Intra sub-partition (ISP) mode are described:

A 1st example provides a method of processing one or more blocks of a picture, the method comprising:

predicting one or more samples of a current block of the picture,
wherein predicting the one or more samples of the current block comprises at least one of:

- processing a plurality of sub-partitions of the current block using a specific processing order or an inverse processing order, the inverse processing order starting with a sub-partition including a bottom-right sample of the current block, and the specific processing order processing the plurality of sub-partitions non-sequentially according to a defined or signaled processing order, or

- processing a plurality of asymmetric sub-partitions of the current block.

A 2nd example provides the method of the 1st example, comprising:

partitioning the current block according to a partitioning mode,
wherein the partitioning mode comprises:

- a horizontal partitioning mode which partitions the current block into N horizontal sub-partitions, each horizontal sub-partition having the same width, with N being an integer > 1, or
- a vertical partitioning mode which partitions the current block into N vertical sub-partitions, each vertical sub-partition having the same height, with N being an integer > 1.

A 3rd example provides the method of the 1st example or the 2nd example, comprising:

partitioning the current block into a plurality of sub-partitions, each of the plurality of sub-partitions having the same sub-partition size,
wherein predicting the plurality of sub-partitions using one of the following:

- an inverse processing order, the inverse processing order predicting the plurality of sub-partitions in a sequence from a first start sub-partition to a first end sub-partition, the first start sub-partition being the sub-partition including the bottom-right sample of the current block and the first end sub-partition including a top-left sample of the current block,
- a specific processing order, the specific processing order processing the plurality of sub-partitions non-sequentially according to a defined or signaled processing order.

A 4th example provides the method of the 1st example or 2nd example, comprising:

partitioning the current block into the plurality of sub-partitions, at least two of the plurality of sub-partitions having different sub-partition sizes,
wherein predicting the plurality of sub-partitions using one of the following:

- an inverse processing order, the inverse processing order predicting the plurality of sub-partitions in a sequence from a first start sub-partition to a first end sub-partition, the first start sub-partition being the sub-partition including the bottom-right sample of the current block and the first end sub-partition including a top-left sample of the current block,
- a specific processing order, the specific processing order processing the plurality of sub-partitions non-sequentially according to a defined or signaled processing order,
- a forward processing order, the forward processing order predicting the plurality of sub-partitions in a sequence from a second start sub-partition to a second end sub-partition, the second start sub-partition including a top-left sample of the current block and the second end sub-partition including a bottom-right sample of the current block.

A 5th example provides the 4th example, wherein a sub-partition size of the plurality of sub-partitions depends on one or more factors.
A 6th example provides the method of the 5th example, wherein the one or more factors comprise one or more of the following:

- an original block size of the current block,
- a number of sub-partitions within the current block,
- one or more transform sizes according to the codec used for processing the current block or the current sub-partition.

A 7th example provides the method of any one of the 4th to 6th examples, wherein the sub-partition, which includes the bottom-right sample of the current block, has a sub-partition size which is smaller than a sub-partition size of any other sub-partition of the current block. An 8th example provides the method of the 7th example, wherein the current block has a block size of $W \times H$ samples and N=2 sub-partitions, and wherein

- in case of a horizontal partitioning mode, the first sub-partition has a sub-partition size of W×1, and the second sub-partition has a sub-partition size of W×(H-1),
- in case of a vertical partitioning mode, the first sub-partition has a sub-partition size of 1×H, and the second sub-partition has a sub-partition size of (W-1)×H.

A 9th example provides the method of any one of the 4th to 8th examples, wherein, in case the codec, which is used for processing the current block or the current sub-partition, does not support a transform for a current sub-partition size, the method comprises:
virtually extending the current sub-partition to a size that is supported by the codec.

A 10th example provides the method of the 9th example, wherein virtually extending the current virtual sub-partition comprises extending the dimension of the current sub-partition horizontally and/or vertically at the coding unit (CU) level or at the prediction unit (PU) level.

An 11th example provides the method of the 9th example, wherein virtually extending the current virtual sub-partition comprises extending the dimension of the current sub-partition horizontally and/or vertically only at the transform unit (TU) level while keeping the dimension of the current sub-partition at the coding unit (CU) level or at the prediction unit (PU) level.

A 12th example provides the method of the 11th example, comprising:
not coding any transform coefficients that fall into an extended area of the current sub-partition.

A 13th example provides the method of any one of the 9th to 12th examples, wherein an extended area of the current sub-partition is filled in one or more of the following ways:

- padding with pre-defined constant values,
- padding with average values of the current sub-partition data,
- padding with closest prediction samples of the current sub-partition,
- padding with reconstructed samples of a next sub-partition.

A 14th example provides the method of any one of the preceding examples, wherein the inverse processing order is used when a block size of the current block is smaller than a first threshold.

A 15th example provides the method of the 14th example, wherein the current block has a block size of W×H samples, with W=m×H or H=m×W, and the inverse processing order is used, when m is greater than or equal to a defined or signaled value.

A 16th example provides the method of any one of the preceding examples, comprising:

determining whether or not the inverse processing order is used for predicting the plurality of sub-partitions, and in case the inverse processing order is not used for predicting the plurality of sub-partitions, predicting the plurality of sub-partitions using the forward processing order or the specific processing order.

A 17th example provides the method of any one of the preceding examples, wherein the specific processing order is used when a block size of the current block is larger than a second threshold.

An 18th example provides the method of any one the preceding examples, wherein the processing order of the plurality of sub-partitions is defined in a specification of a codec used for processing the current block.

A 19th example provides the method of any one of the preceding examples, comprising:

determining whether or not the specific processing order is used for predicting the plurality of sub-partitions, and in case the specific processing order is not used for predicting the plurality of sub-partitions, predicting the plurality of sub-partitions using the forward processing order or the inverse processing order.

A 20th example provides the method of any one of the preceding examples, wherein processing the one or more blocks comprises decoding the one or more blocks and partitioning a current block in accordance with at least one partitioning parameter, like at least one of a partitioning mode, which indicates the partitioning to be horizontal or vertical and/or symmetrical or asymmetrical, or a number of sub-partitions.

A 21st example provides the method of the 20th example, comprising:

for the current block, retrieving from a data stream, which includes data representing the picture, an indication which indicates the at least one partitioning parameter, and
partitioning the current block according to the at least one partitioning parameter,

A 22nd example provides the method of the 20th example, wherein

a specification of a codec used for processing the current block defines a plurality of modes, each mode including at least one partitioning parameter, and
the method comprises:

> for the current block, retrieving from a data stream, which includes data representing the picture, an indication which indicates the mode to be used for processing the current block, and
> partitioning the current block according to the retrieved mode

A 23rd example provides the method of the 20th example, wherein

> for blocks of different block sizes respective modes are defined, each mode including at least one partitioning parameter, and
> the method comprises:
> partitioning the current block using the mode associated with the block size of the current block.

A 24th example provides the method of any one of the 1st to 19th examples, wherein processing the one or more blocks comprises decoding the one or more blocks, and the method comprises:

> for the current block, retrieving from a data stream, which includes data representing the picture, an indication, which indicates that the inverse processing order is used for predicting the plurality of sub-partitions, and predicting the plurality of sub-partitions according to the inverse processing order, or
> for the current block, retrieving from a data stream, which includes data representing the picture, an indication of the processing order of the plurality of sub-partitions, and predicting the plurality of sub-partitions according to the retrieved processing order.

A 25th example provides the method of any one of the 1st to 19th examples, wherein processing the one or more blocks comprises encoding the one or more blocks, and the method comprises:

> for the current block, including into a data stream, which includes data representing the picture, an indication which indicates that the inverse processing order is used, or
> for the current block, including into a data stream, which includes data representing the picture, an indication of the processing order of the plurality of sub-partitions.

A 26th example provides a method for decoding an encoded data stream, the encoded data stream including data representing a picture, the method comprising:

> decoding from the encoded data stream the picture,
> wherein decoding the picture comprises processing one or more blocks of the picture according to the method of any one of the preceding examples

A 27th example provides a method for encoding a picture into an encoded data stream, the encoded data stream including data representing the picture, the method comprising:

> receiving an original picture, and
> encoding the picture into the encoded data stream,
> wherein encoding the picture comprises processing one or more blocks of the picture according to the method of any one of the 1st to 25th examples.

A 28th example provides a non-transitory computer-readable storage medium comprising instructions which, when executed by a computer, cause the computer to carry out the method of any one of the preceding examples.
A 29th example provides an apparatus of processing one or more blocks of a picture, the apparatus comprising:

> a processing module configured to predict one or more samples of a current block of the picture,
> wherein, for predicting the one or more samples of the current block, the processing module is configured to perform at least one of the following:
>
> - processing a plurality of sub-partitions of the current block using a specific processing order or an inverse processing order, the inverse processing order starting with a sub-partition including a bottom-right sample of the current block, and the specific processing order processing the plurality of sub-partitions non-sequentially according to a defined or signaled processing order, or

- processing a plurality of asymmetric sub-partitions of the current block.

A 30th example provides an apparatus for decoding an encoded data stream, the encoded data stream including data representing a picture, the apparatus comprising:

a decoder module configured to decode from the encoded data stream the picture, and
a prediction module, the prediction module including an apparatus according to the 29th example.

A 31st example provides an apparatus for encoding a picture into an encoded data stream, the encoded data stream including data representing the picture, the apparatus comprising:

an encoder module configured to receive the original picture and to encode the picture into the encoded data stream, and
a prediction module, the prediction module including an apparatus according to the 29th example.

A 32nd example provides a data stream having encoded thereinto a picture, wherein the data stream comprises: for a current block of the picture, the current block being partitioned into a plurality of sub-partitions, an indication, like one or more flags or indices, which indicates one or more of the following:

- a use of an inverse processing order,
- a processing order of the plurality of sub-partitions,
- a partitioning mode and a number of sub-partitions for partitioning the current block into asymmetric sub-partitions,
- a mode for partitioning the current block into asymmetric sub-partitions, the mode being selected from a plurality of modes defined in a specification of a codec used for processing the current block, and each mode defining a partitioning mode and a number of sub-partitions.

As mentioned above, intra prediction modes tend to provide more accurate prediction of the samples that are closer to the block boundary reference samples (i.e., left and above block regions), and less accurate for samples toward the right and bottom area of the block as there are no available reference samples for prediction in near vicinity. Thus, in many intra-coded blocks, most of the residual energy are located in the bottom-right area of the block.
The above described Intra sub-partition (ISP) mode and Flexible Intra sub-partition (ISP) mode in VVC aims at compensating for such inaccurate sample prediction in the block by splitting the block into multiple sub-partitions and predicting each sub-partition samples from previously reconstructed sub-partition samples. Even though the existing ISP methods may provide better prediction performance, they have the following drawbacks which makes their prediction performance sub-optimal:

- The intra prediction process always predicts the sub-partition samples from the reference samples in above and/or left side of the sub-partition.
- The intra prediction process use only a uni-prediction mechanism when predicting the sub-partition samples.

Stated differently, conventionally, only two reference areas (above + left of the current block or left of the current block + predicted sub-partition above) are available for selecting the reference samples for the prediction of a sub-partition. However, there are situations, e.g., when predicting a sub-partition using a certain processing order (like forward, inverse or specific) as described above, in which relying only on two reference areas may not be optimal for the prediction.
Embodiments of the present disclosure provide approaches for improving the intra prediction mechanism and performance of ISP methods, like above described ISP mode and the flexible ISP mode described the above and in the mentioned European Patent Application EP24315484.6, which is hereby incorporated by reference. Embodiments of the present disclosure may be combined, e.g., with any of the above described examples of the flexible Intra sub-partition (ISP) mode. More specifically, embodiments of the present disclosure provide for three or more areas from which one (uni-prediction) or at least two different (bi- or multi-prediction) reference areas are selected, and from the one or more reference areas the reference or reconstructed sample are obtained for the prediction. Thus, one aspect provides a flexible uni-prediction mechanism for coding the sub-partitions with a certain processing order (like forward, inverse or specific), while another aspect provides a flexible bi-prediction or multi-direction prediction mechanism for coding the sub-partitions with a certain processing order (like forward, inverse or specific).

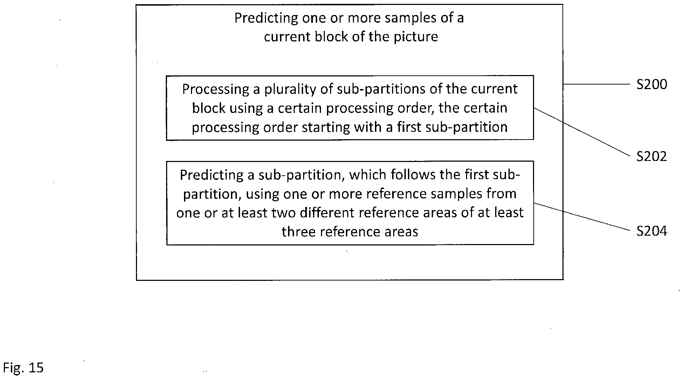

Fig. 15 illustrates a flow diagram of an embodiment of a method of processing one or more blocks of a picture. The method includes:

S200: Predicting one or more samples of a current block of the picture.
Predicting the one or more samples of the current block includes:

S202: Processing a plurality of sub-partitions of the current block using a certain processing order, the certain processing order starting with a first sub-partition.
S204: Predicting a sub-partition, which follows the first sub-partition, using one or more reference samples from one or at least two different reference areas of at least three reference areas.

In accordance with embodiments, the at least three reference areas comprise at least: an above reference area including previously reconstructed reference samples above the current block, a left reference area including previously reconstructed reference samples left of the current block, and a sub-partition reference area including reconstructed samples from a previously predicted sub-partition.

In accordance with embodiments, samples of the plurality of sub-partitions are predicted using one of the following: a uni-prediction mechanism, a bi-prediction mechanism, or a multi-prediction mechanism.

In accordance with embodiments, for a multi-prediction more than two reference areas are used. The three or more reference areas may comprise a right or a bottom reference area outside of the current block, and the right or bottom reference area includes interpolated reference samples obtained by interpolating previously reconstructed reference samples from reference areas above, above-right and left of the current block. The interpolation of reference samples is used for the right reference area when the partitioning is horizontal, and for the bottom reference area when the partitioning is vertical.

In accordance with embodiments, for each of the plurality of sub-partitions or for the current block, it is selected whether to use the uni-prediction mechanism or the bi-prediction mechanism or the multi-prediction mechanism, e.g., by using an RDO process, and the selected mechanism is signaled in a data stream, which includes data representing the picture.

*Flexible uni-prediction mechanism*

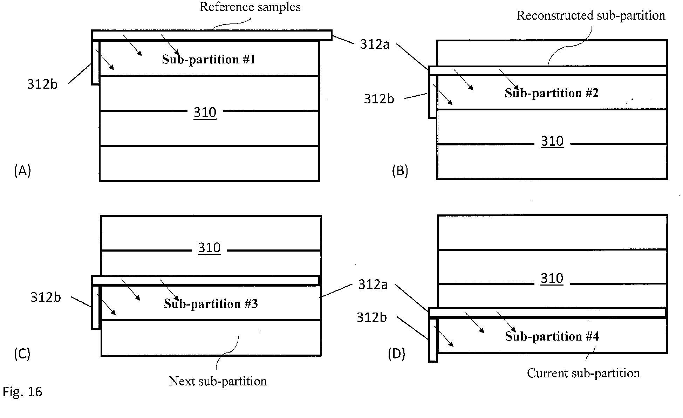

The existing ISP mode of VVC uses a uni-prediction mechanism for predicting the samples of each sub-partition in a way that the reference samples for predicting each sub-partition are the immediate neighboring reconstructed sample. The immediate neighboring reconstructed samples may be samples from outside of the original block and/or samples from the previously (de)coded sub-partition within the original block. Fig. 16(A) to Fig. 16(D) illustrate an example of such a scenario. In this example, an ISP block 310 is divided into the four horizontal sub-partitions #1 to #4 and the (de)coding order of sub-partitions is from top to bottom. Sub-partition #1 uses reference samples outside of the original block 310 for sample prediction, more specifically, reference samples from the above reference area 312a and from the left reference area 312b, which are both outside the current block. The other sub-partitions #2 to #4 use for the sample prediction reference samples from both outside of the original block (left border), namely from the left reference area 312b, and reference samples from previously reconstructed sub-partitions (from above), namely from sub-partition reference areas $314_{\#1}$, $314_{\#2}$ and $314_{\#3}$, respectively.

The above flexible partitioning and processing order, as described above and in European Patent Application EP24315484.6, which is hereby incorporated by reference, provides opportunities for enabling flexible prediction methods for sub-partitions when compared to the above described ISP mode of VVC. When the processing order of the sub-partitions is not following the forward processing order of VVC, but an inverse or specific processing order, a more flexible prediction mechanism is possible when doing the sub-partition prediction.

In the inverse processing order of sub-partitions, the prediction process of the second sub-partition and beyond may have the option of using reference samples from three reference sides compared to the two available reference side in forward processing order.

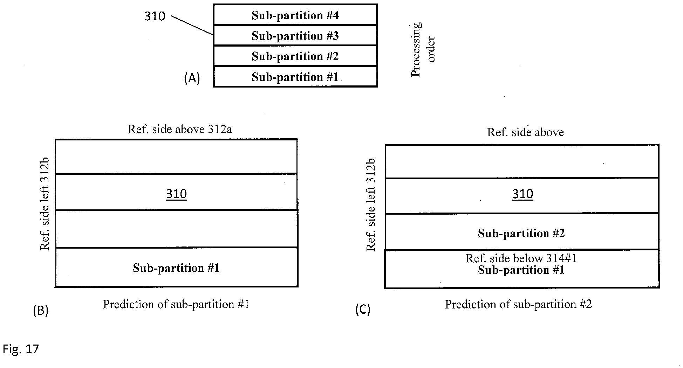

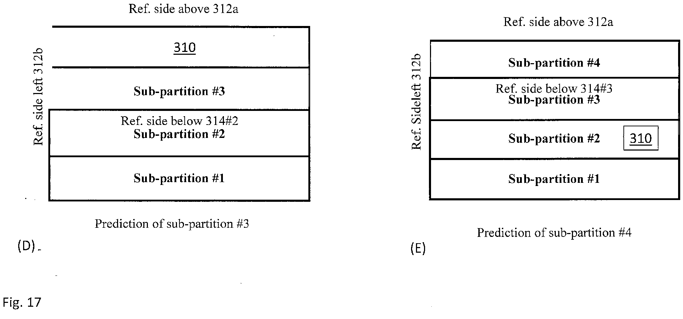

Fig. 17(A) to Fig. 17(E) illustrates a symmetric ISP partitioning and the available reference areas for selecting the reference samples for the intra prediction in accordance with embodiments of the present disclosure using a uni-prediction mechanism. Fig. 17(A) illustrates an ISP block with four horizontal sub-partitions #1 to #4 using the inverse processing order. As shown in Fig. 17(B), sub-partition #1 (bottom sub-partition) is being processed first and it may use reference samples in above and left sides 312a, 312b of the original block 310 in order to predict its samples. However, as is shown in Fig. 17(C), when sub-partition #2 is being processed, the reference samples from a bottom area 314#1 of that sub-partition, namely reconstructed samples from sub-partition #1, are now available in addition to the typical reference samples from above and left sides 312a, 312b of the original block. Similar behavior exists for sub-partitions #3 and #4 where, as is illustrated in Fig. 17(D) and Fig. 17(E), respectively, reference samples from below sub-partitions 314#2, 314#3 are now available in addition to the above and left reference samples 312a, 312b of the original block 310.

Thus, in this embodiment, when predicting the second sub-partition and beyond, the prediction process may use reference samples from that side among the above side 312a, the left side 312b and the below side 314#1, 314#2, 314#3 that provides a better prediction accuracy.

In the same way, in an ISP mode with vertical sub-partitioning, when predicting the second sub-partition and beyond, the prediction process may use reference sample from that side among the above side 312a, the left side 312b and a right side that provides a better prediction accuracy.

In accordance with embodiments, the reference side or area including the best performing samples that achieve a more accurate prediction that other sides may be determined, e.g., at the encoder side, using a rate-distortion optimization (RDO) process and the choice of the reference side or area may be signaled in a bitstream carrying data representing the picture.

In accordance with embodiments, the choice of the reference side or area for the prediction may change for every sub-partition, and a dedicated signaling for this choice may be provided for each sub-partition. In accordance with other embodiments, all sub-partitions may use the same reference side choice for the prediction, based on an RDO decision, and a single flag may be signaled in the bitstream for determining the choice of the reference side for the entire ISP block.

In accordance with embodiments, the first sub-partition in the processing order may only use samples from the above and left side reference side for the prediction. Thus, there may not be any additional signaling for the first sub-partition needed for indicating the reference samples side. For the first sub-partition, the reference samples side may be implicitly decided based on the intra mode which is used for the prediction of the first sub-partition.

In accordance with other embodiments, the choice from which side the reference samples are to be used for predicting each sub-partition may be determined implicitly, e.g., at the decoder side. The spatial distance of the sub-partition to each available reference sample may be considered. In this case, the reference samples that are in closer spatial distance to the particular sub-partition may be used for the prediction.

In many legacy video codecs, such as VVC and HEVC, the intra prediction directions that are defined in the codec's specification cover intra directions from left and above side reference samples. Since, in typical intra prediction process, the right and below reference samples of a block is not available, such intra prediction directions are not defined in legacy codecs. According to embodiments of the present disclosure, when predicting from below reference samples (in horizontal partitioning) or from right reference samples (in vertical partitioning), dedicated intra prediction directions may be introduced so that they facilitate the prediction process from the below and/or right area reference samples. In accordance with other embodiments, instead of introducing dedicated intra prediction directions, the below-side and/or right-side reference samples may be projected to the corresponding areas in above and/or left side. Such a reference sample projection may facilitate the usage of existing intra prediction directions. For this, a mapping mechanism may be used for mapping the intra prediction direction from below and/or right to the corresponding directions from above and/or left sides. When projecting the below-side and/or right-side reference samples to the corresponding areas in left and/or above sides, an interpolation and/or filtering method may be applied to the reference samples.

Stated differently, the reference samples from the right sub-partition reference area (in vertical partitioning) and/or from a below sub-partition reference area 314#1, 314#2, 314#3 (in case of a horizontal partitioning) are projected to above and/or left reference areas, and the above and/or left reference areas may be reference areas of the current block or a currently processed sub-partition. This may depends on the sub-partition position that is currently predicted. For example, if the sub-partition that is predicted locates at the top of the block (i.e., includes a top-left sample of the current block), then if projecting the below reference samples to above, these projected samples will fall above the current block. However, if the sub-partition that is predicted does not include the top-left sample of the current block, then if projecting the below samples, these projected samples may be located within the current block area.

The above embodiments of performing a uni-prediction using one or more reference samples which have been selected from one of at least three reference areas have been described with reference to the inverse processing order. However, the present disclosure is not limited to such embodiments. In accordance with other embodiments, the uni-prediction using one or more reference samples which have been selected from one of at least three reference areas may also be performed using the above described forward processing order or specific processing order. In the same way as described above, when predicting the second sub-partition and beyond using he forward/specific processing order, the prediction process may use reference samples from that side among the above side 312a, the left side 312b and the sub-partition side (the reconstructed samples in a neighboring already predicted sub-partition) that provides a better prediction accuracy.

*Flexible bi-prediction mechanism*

In accordance with further embodiments, when a non-forward processing order for the sub-partitions is used, the second sub-partition and beyond may use reference samples from two reference sides in a bi-prediction way for predicting the sub-partition samples.

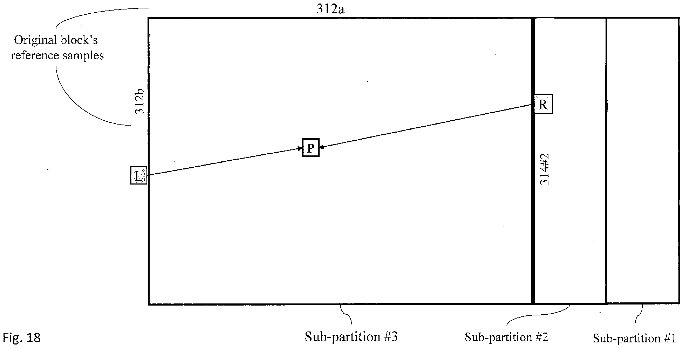

Fig. 18 illustrates an embodiment of an asymmetric ISP with a vertical split mode and an inverse processing order. Sub-partition #1 is processed first followed by processing of sub-partition #2, thus, their reconstructed samples are available to be used in predicting the samples of sub-partition #3. Depending on the intra mode used for sub-partition #3, the prediction process may use reconstructed samples 314#2 from sub-partition #2 and typical reference samples 312a, 312b of the original block for prediction. As shown in the figure, pixel **P** in sub-partition #3 is bi-predicted from reference sample **L** (from reconstructed samples 312b outside of the original block) and reference sample **R** (from the reconstructed samples 314#2 of sub-partition #2).

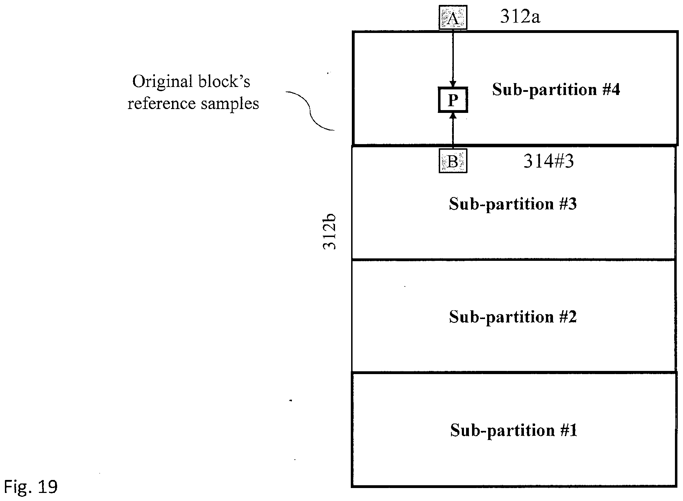

Fig. 19 illustrates an embodiment of a symmetric ISP with a horizontal split mode and an inverse processing order. As is shown, pixel **P** in sub-partition #4 is bi-predicted from reference sample **A** (from reconstructed samples 312a outside of the original block) and reference sample **B** (from the reconstructed samples 314#4 of sub-partition #3).

In accordance with further embodiments, the bi-prediction mechanism may be also used in ISP with a forward processing order of the sub-partitions. For this, the samples of a sub-partition may be predicted from two or more of the reference areas or lines from previously reconstructed reference samples outside of the original block and/or reconstructed samples from the previous sub-partitions.

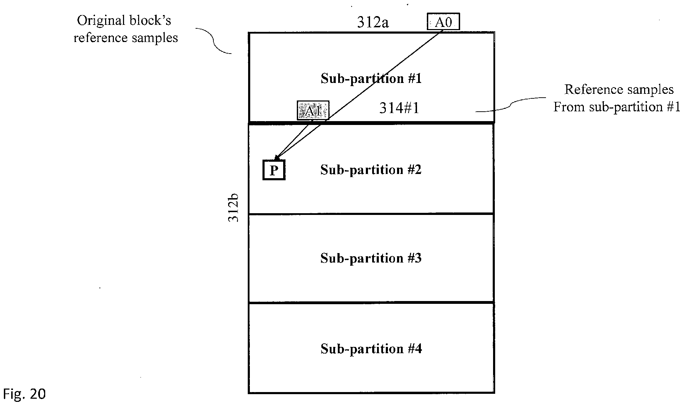

Fig. 20 illustrates an embodiment of a bi-prediction process in symmetric ISP partitioning with a forward processing order. The pixel **P** in sub-partition #2 may use reference samples $A_0$ (from outside 312a of the original block) and $A_1$ (from 314#1 of sub-partition #1) for the bi-prediction.

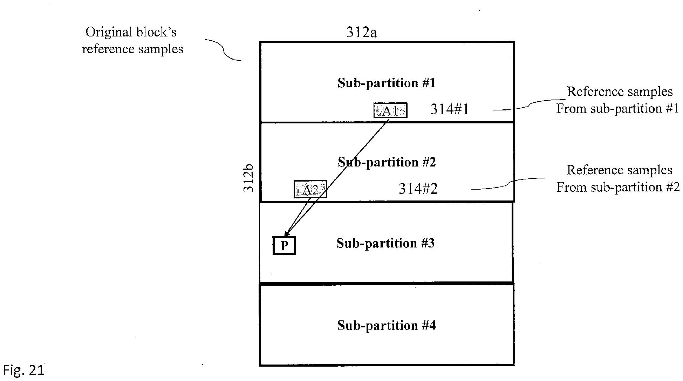

Fig. 21 illustrates a further embodiment of a multi-prediction process in symmetric ISP partitioning with a forward processing order. The pixel **P** in sub-partition #3 may use reference samples $A_1$ (from 314#1 sub-partition #1) and $A_2$ (from 314#2 sub-partition #2) for bi-prediction.

The above embodiments of performing a bi-prediction using one or more reference samples which have been selected from two of at least three reference areas have been described with reference to the forward and inverse processing order. However, the present disclosure is not limited to such embodiments. In accordance with other embodiments, the bi-prediction using one or more reference samples which have been selected from two of at least three reference areas may also be performed using the above described specific processing order. In the same way as described above, when predicting the second sub-partition and beyond using the specific processing order, the prediction process may use reference samples from that sides among the above side 312a, the left side 312b and the sub-partition side (the reconstructed samples in a neighboring already predicted sub-partition) that provide a better prediction accuracy.

*Flexible multi-prediction mechanism*

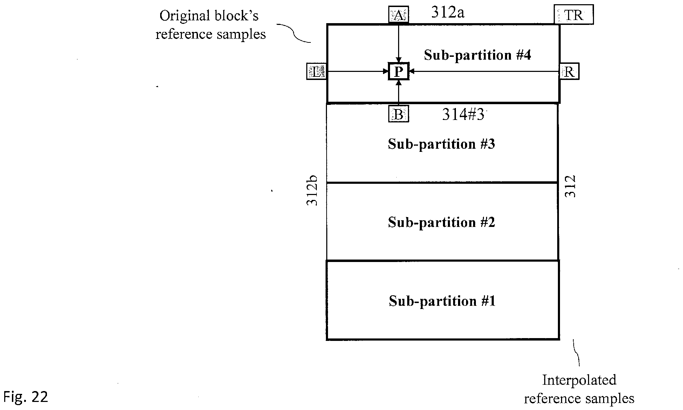

In accordance with further embodiments, a multi-direction prediction mechanism may be used. Fig. 22 illustrates an embodiment of a symmetric ISP with a horizontal split mode and an inverse processing order. The pixel **P** in sub-partition #4 may use reference samples **A** and **L** (from reconstructed samples 312a, 312b outside of the original block), **B** (from the reconstructed samples 314#3 of sub-partition #3) and **R** (interpolated reference samples 312c using above, above-right and left reference samples from outside of the original) for prediction.

The right-side reference samples 312c from outside of original block are not typically available in the (de)coding process of legacy standards. Such samples may be interpolated using the available reference samples. For this, similar interpolation mechanism also used in some legacy intra prediction tools, such as the Planar prediction mode in VVC, may be employed.

The above embodiments of performing a multi-prediction using one or more reference samples which have been selected from three or more of at least three reference areas have been described with reference to the inverse processing order. However, the present disclosure is not limited to such embodiments. In accordance with other embodiments, the multi-prediction using one or more reference samples which have been selected from three or more of at least three reference areas may also be performed using the above described forward processing order or specific processing order. In the same way as described above, when predicting the second sub-partition and beyond using he forward/specific processing order, the prediction process may use reference samples from that side among the above side 312a, the left side 312b, the right side 312c and the sub-partition sides (the reconstructed samples in a neighboring already predicted sub-partition) that provides a better prediction accuracy.

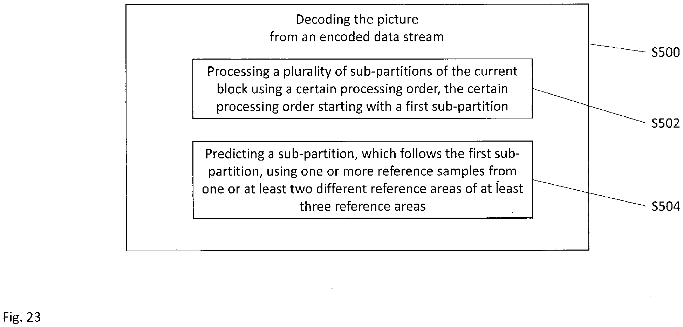

Fig. 23 illustrates a flow diagram of a method for decoding an encoded data stream, the encoded data stream including data representing a picture. The method includes the following:

S500: Decoding from the encoded data stream the picture.
Decoding the picture comprises predicting the one or more samples of the current block, and predicting the one or more samples of the current block includes:

S502: Processing a plurality of sub-partitions of the current block using a certain processing order, the certain processing order starting with a first sub-partition.
S504: Predicting a sub-partition, which follows the first sub-partition, using one or more reference samples from one or at least two different reference areas of at least three reference areas.

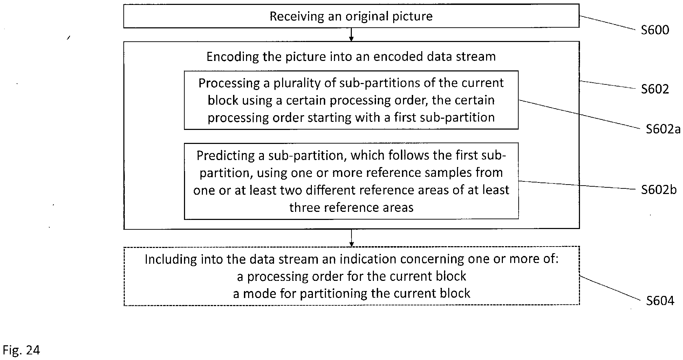

Fig. 24 illustrates a flow diagram of a method for encoding a picture into an encoded data stream. The encoded data stream includes data representing the picture and the method includes the following:

S600: Receiving an original picture.
S602: Encoding the picture into the encoded data stream.
Encoding the picture comprises predicting the one or more samples of the current block, and predicting the one or more samples of the current block includes:

S602a: Processing a plurality of sub-partitions of the current block using a certain processing order, the certain processing order starting with a first sub-partition.
S602b: Predicting a sub-partition, which follows the first sub-partition, using one or more reference samples from one or at least two different reference areas of at least three reference areas.

Optionally, the method comprises including S604 into the data stream one or more flags or indices which indicate for a current block of the picture or for one or more or all of a plurality of sub-partitions into which the current block is partitioned, and for a prediction process, which uses one or more reference samples from one or at least two different reference areas of at least three reference areas, one or more of the following:

- whether the prediction process uses a uni-prediction mechanism, or a bi-prediction mechanism or a multi-prediction mechanism,
- respective reference areas from which reference samples for the prediction process are obtained for each or all of the plurality of sub-partitions or for each or all of the plurality of sub-partitions which follow the first sub-partition.

Further embodiments

So far, the inventive concept has been described with reference to aspects and embodiments concerning methods of processing one or more blocks of a picture. In accordance with further embodiments, the present disclosure also provides an apparatus of processing one or more blocks of a picture as well as encoders/decoders including such an apparatus.

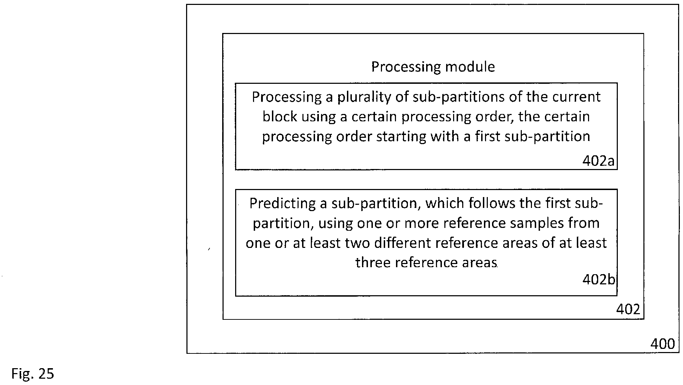

Fig. 25 illustrates a block diagram of an apparatus of predicting one or more blocks of a picture in accordance with embodiments of the present disclosure. The apparatus 400 includes the following modules:

402: A processing module configured to predict one or more samples of a current block of the picture.
For predicting the one or more samples of the current block, the processing module is configured to:

402a: Process a plurality of sub-partitions of the current block using a certain processing order, the certain processing order starting with a first sub-partition.
402b: Predict a sub-partition, which follows the first sub-partition, using one or more reference samples from one or at least two different reference areas of at least three reference areas.

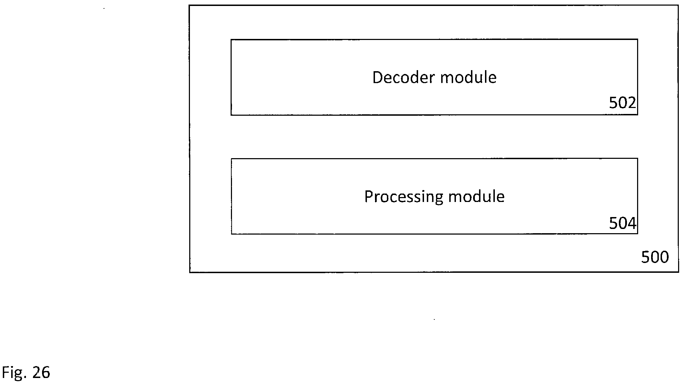

Fig. 26 illustrates a block diagram of a decoder for decoding an encoded data stream in accordance with embodiments of the present disclosure. The encoded data stream includes data representing a picture. The decoder 500 includes the following modules:

502: A decoder module configured to decode from the encoded data stream the picture.
504: A processing module including an apparatus in accordance with embodiments of the present disclosure. For example, the processing module may implement the prediction module 170 as depicted in Fig. 2. The prediction module configured to operate in accordance with embodiments of the present disclosure so as to perform one or more of the following:

- Process a plurality of sub-partitions of the current block using a certain processing order, the certain processing order starting with a first sub-partition.
- Predict a sub-partition, which follows the first sub-partition, using one or more reference samples from one or at least two different reference areas of at least three reference areas.

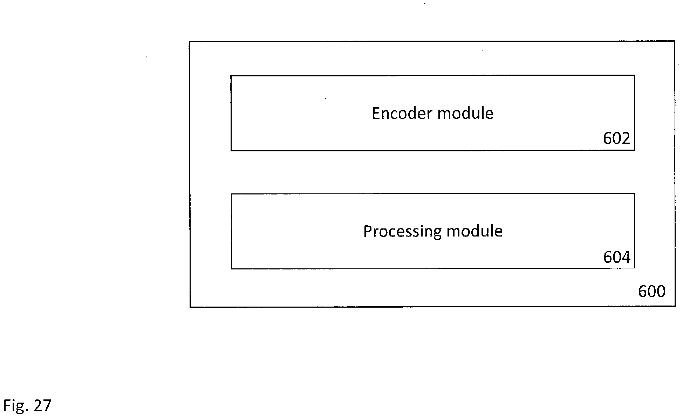

Fig. 27 illustrates a block diagram of an encoder for encoding a picture into an encoded data stream in accordance with embodiments of the present disclosure. The encoded data stream includes data representing the picture. The encoder 600 includes the following modules:

602: An encoder module configured to receive the original picture and to encode the picture into the encoded data stream.
604: A processing module including an apparatus in accordance with embodiments of the present disclosure. For example, the processing module may implement prediction module 124 as depicted in Fig. 1. The prediction module may be configured to operate in accordance with embodiments of the present disclosure so as to perform one or more of the following:

- Process a plurality of sub-partitions of the current block using a certain processing order, the certain processing order starting with a first sub-partition.
- Predict a sub-partition, which follows the first sub-partition, using one or more reference samples from one or at least two different reference areas of at least three reference areas.

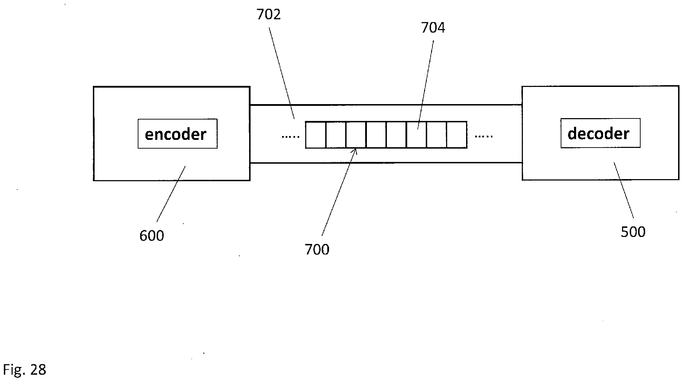

Fig. 28 illustrates a data stream 700 in accordance with embodiments of the present disclosure, which has encoded thereinto a picture and information or data associated with the picture. For example, the data stream or bitstream 700 may be provided by an encoder 600 that performs the inventive method for encoding the picture into the data stream 700. The data stream 700 is transmitted to a decoder 500 via a wired or wireless transmission medium 702, like cable or a radio link. The decoder 500 performs the inventive method for decoding the picture from the data stream 700. For a current block of the picture or for one or more or all of a plurality of sub-partitions into which the current block is partitioned, the data stream 700 includes one or more indications 704, like one or more flags or indices. The one or more indications 704 are for a prediction process, which uses one or more reference samples from one or at least two different reference areas of at least three reference areas, and the one or more indications indicate one or more of the following:

- whether the prediction process uses a uni-prediction mechanism, or a bi-prediction mechanism or a multi-prediction mechanism,
- respective reference areas from which reference samples for the prediction process are obtained for each or all of the plurality of sub-partitions or for each or all of the plurality of sub-partitions which follow the first sub-partition.

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

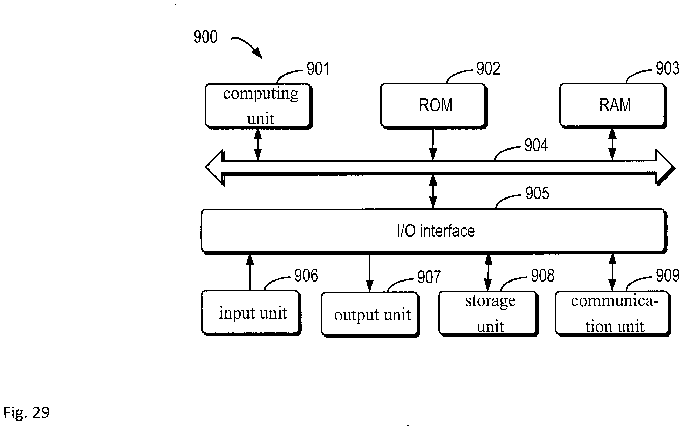

Fig. 29 is a block diagram illustrating an electronic device 900 according to embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present disclosure described and/or claimed herein. The device 900 includes a computing unit 901 to perform various appropriate actions and processes according to computer program instructions stored in a read only memory (ROM) 902, or loaded from a storage unit 908 into a random access memory (RAM) 903. In the RAM 903, various programs and data for the operation of the storage device 900 can also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks. The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms, digital signal processor (DSP), and any suitable processor, controller, microcontroller, etc. The computing unit 901 performs various methods and processes described above, such as an image processing method. For example, in some embodiments, the image processing method may be implemented as computer software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing unit 901, one or more steps of the image processing method described above may be performed. In some embodiments, the computing unit 901 may be configured to perform the image processing method in any other suitable manner (e.g., by means of firmware).

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code can be executed entirely on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user can provide an input to the computer. Other types of devices can also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user.

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user can interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It is to be understood that the steps may be reordered, added or deleted by using the various forms of flows shown above. For example, the steps described in the present disclosure may be executed in parallel, sequentially, or in different orders, as long as the desired results of the technical solutions in the present disclosure can be achieved, and no limitation is imposed herein.

Further embodiments are now described:

A 1st embodiment provides a method of processing one or more blocks of a picture, the method comprising:

predicting one or more samples of a current block of the picture,
wherein predicting the one or more samples of the current block comprises:

- processing a plurality of sub-partitions of the current block using a certain processing order, the certain processing order starting with a first sub-partition, and
- predicting a sub-partition, which follows the first sub-partition, using one or more reference samples from one or at least two different reference areas of at least three reference areas.

A 2nd embodiment provides the method of the 1st embodiment, wherein the at least three reference areas comprise at least:

- an above reference area including previously reconstructed reference samples above the current block,
- a left reference area including previously reconstructed reference samples left of the current block,
- a sub-partition reference area including reconstructed samples from a previously predicted sub-partition.

A 3rd embodiment provides the method of the 1st embodiment or the 2nd embodiment, wherein samples of the plurality of sub-partitions are predicted using one of the following:

- a uni-prediction mechanism,
- a bi-prediction mechanism, or
- a multi-prediction mechanism.

A 4th embodiment provides the method of the 3rd embodiment, comprising:

selecting, for each of the plurality of sub-partitions or for the current block, whether to use the uni-prediction mechanism or the bi- prediction mechanism or the multi-prediction mechanism, e.g., by using an RDO process, and
signaling the selected mechanism in a data stream, which includes data representing the picture.

A 5th embodiment provides the method of any one of the preceding embodiments, wherein for predicting the sub-partitions, which follow the first sub-partition, the one or more reference samples are selected from three or more reference areas.

A 6th embodiment provides the method of the 5th embodiment, wherein the three or more reference areas comprise a right or a bottom reference area outside of the current block, the reference area including interpolated reference samples obtained by interpolating previously reconstructed reference samples from reference areas above, above-right and left of the current block.

A 7th embodiment provides the method of the 6th embodiment, wherein the previously reconstructed reference samples are interpolated using an interpolation mechanism of an intra prediction tool, like Planar prediction mode in VVC.

An 8th embodiment provides the method of any one of the preceding embodiments, wherein, for predicting the sub-partitions, respective reference areas are selected, which include reference samples providing a best prediction accuracy.

A 9th embodiment provides the method of the 8th embodiment, wherein the respective reference areas are selected using a rate-distortion optimization (RDO) process.

A 10th embodiment provides the method of the 8th embodiment or the 9th embodiment, wherein the respective reference areas are selected per sub-partition, which follows the first sub-partition, and are signaled in a data stream, which includes data representing the picture.

An 11th embodiment provides the method of the 8th embodiment or 9th embodiment, wherein the respective reference areas are selected for all of the plurality of sub-partitions, which follow the first sub-partition, and are signaled in a data stream, which includes data representing the picture.

A 12th embodiment provides the method of the 11th embodiment, wherein the respective reference areas selected for all of the plurality of sub-partitions are also used for the first sub-partition.

A 13th embodiment provides the method of the 10th embodiment or 11th embodiment, wherein respective reference areas are selected for the first sub-partition, and are signaled in the data stream.

A 14th embodiment provides the method of the 10th embodiment or the 11th embodiment, wherein respective reference areas are selected for the first sub-partition based on an intra mode for predicting the first sub-partition.

A 15th embodiment provides the method of any one of the preceding embodiment s, wherein the reference samples are selected from the respective reference areas using a spatial distance of a particular sub-partition to each available reference sample in the respective reference areas.

A 16th embodiment provides the method of the 15th embodiment, wherein reference samples having a closest spatial distance to the particular sub-partition are used for predicting the sub-partition.

A 17th embodiment provides the method of any one of the preceding embodiments, wherein the certain processing order comprises a forward processing order, the forward processing order predicting the plurality of sub-partitions in a sequence from the first sub-partition, which includes a top-left sample of the current block, to an end sub-partition, which includes a bottom-right sample of the current block.

An 18th embodiment provides the method of any one of the 1st to 16th embodiments, wherein the certain processing order comprises

- a specific processing order, the specific processing order processing the plurality of sub-partitions non-sequentially according to a defined or signaled processing order, or
- an inverse processing order, the inverse processing order predicting the plurality of sub-partitions in a sequence from the first start sub-partition, which includes a bottom-right sample of the current block, to an end sub-partition, which includes a top-left sample of the current block.

A 19th embodiment provides the method of the 18th embodiment, wherein, when predicting a sub-partition using reference samples selected from a sub-partition reference area below or right of the sub-partition,

- dedicated intra prediction directions, are used to facilitate a prediction process using the reference samples from the below and/or right sub-partition reference area, or
- intra prediction directions from below and/or right are mapped to corresponding intra prediction directions from above and/or left.

A 20th embodiment provides the method of the 18th embodiment, wherein, when predicting a sub-partition using reference samples selected from a sub-partition reference area below or right of the sub-partition, the reference samples from the below and/or right sub-partition reference area are projected to above and/or left reference areas of the current block or a currently processed sub-partition.

A 21st embodiment provides the method of the 20th embodiment, wherein projecting the reference samples comprises interpolating and/or filtering the reference samples.

A 22nd embodiment provides the method of any one of the preceding embodiment s, wherein the current block is partitioned into the plurality of sub-partitions such that each of the plurality of sub-partitions has the same sub-partition size.

A 23rd embodiment provides the method of any one of the 1st to 21st embodiments, wherein the current block is partitioned into the plurality of sub-partitions such that at least two of the plurality of sub-partitions have different sub-partition sizes.

A 24th embodiment provides the method the 23rd embodiment, wherein the sub-partition, which includes the bottom-right sample of the current block, has a sub-partition size which is smaller than a sub-partition size of any other sub-partition of the current block.

A 25th embodiment provides the method of the 23rd embodiment or the 24th embodiment, wherein

in case the codec, which is used for processing the current block or the current sub-partition, does not support a transform for a sub-partition size of the current sub-partition, the current sub-partition is virtually extended to a size that is supported by the codec, and
an extended area of the current sub-partition is filled in one or more of the following ways:

- padding with pre-defined constant values,
- padding with average values of the current sub-partition data,
- padding with closest prediction samples of the current sub-partition,
- padding with reconstructed samples of a next sub-partition.

A 26th embodiment provides the method of any one of the 22nd to 25th embodiments, wherein the current block is partitioned into the plurality of sub-partitions according to

- a horizontal partitioning mode which partitions the current block into N horizontal sub-partitions, each horizontal sub-partition having the same width, with N being an integer > 1, or
- a vertical partitioning mode which partitions the current block into N vertical sub-partitions, each vertical sub-partition having the same height, with N being an integer > 1.

A 27th embodiment provides a method for decoding an encoded data stream, the encoded data stream including data representing a picture, the method comprising:

decoding from the encoded data stream the picture,
wherein decoding the picture comprises processing one or more blocks of the picture according to the method of any one of the preceding embodiments.

A 28th embodiment provides a method for encoding a picture into an encoded data stream, the encoded data stream including data representing the picture, the method comprising:

receiving an original picture, and
encoding the picture into the encoded data stream,
wherein encoding the picture comprises processing one or more blocks of the picture according to the method of any one of the 1st to 26th embodiments.

A 29th embodiment provides a non-transitory computer-readable storage medium comprising instructions which, when executed by a computer, cause the computer to carry out the method of any one of the preceding embodiments.

A 30th embodiment provides an apparatus of processing one or more blocks of a picture, the apparatus comprising:

a processing module configured to predict one or more samples of a current block of the picture,
wherein, for predicting the one or more samples of the current block, the processing module is configured to

- process a plurality of sub-partitions of the current block using a certain processing order, the certain processing order starting with a first sub-partition, and
- predict a sub-partition, which follows the first sub-partition, using one or more reference samples from one or at least two different reference areas of at least three reference areas.

A 31st embodiment provides an apparatus for decoding an encoded data stream, the encoded data stream including data representing a picture, the apparatus comprising:

a decoder module configured to decode from the encoded data stream the picture, and
a prediction module, the prediction module including an apparatus according to the 30th embodiment.

A 32nd embodiment provides an apparatus for encoding a picture into an encoded data stream, the encoded data stream including data representing the picture, the apparatus comprising:

an encoder module configured to receive the original picture and to encode the picture into the encoded data stream, and
a prediction module, the prediction module including an apparatus according to the 30th embodiment.

A 33rd embodiment provides a data stream having encoded thereinto a picture, wherein the data stream comprises:

for a current block of the picture or for one or more or all of a plurality of sub-partitions into which the current block is partitioned, one or more indications, like one or more flags or indices,

wherein the one or more indications are for a prediction process, which uses one or more reference samples from one or at least two different reference areas of at least three reference areas, and

wherein one or more indications indicate one or more of the following:

- whether the prediction process uses a uni-prediction mechanism, or a bi-prediction mechanism or a multi-prediction mechanism,
- respective reference areas from which reference samples for the prediction process are obtained for each or all of the plurality of sub-partitions or for each or all of the plurality of sub-partitions which follow the first sub-partition.

The above-mentioned specific embodiments do not limit the scope of protection of the present disclosure. It is to be understood by those skilled in the art that various modifications, combinations, sub-combinations and replacements may be made depending on design requirements and other factors. Any modifications, equivalent replacements, and improvements made within the principles of the present disclosure or invention is to be included within the protection scope of the present disclosure or invention.

**References**

[1] H.264: Advanced video coding for generic audiovisual services, https://www.itu.int/rec/T-REC-H.264-202108-P/en
[2] H.265: High efficiency video coding, https://www.itu.int/rec/T-REC-H.265-202108-P/en
[3] H.266: Versatile video coding, https://www.itu.int/rec/T-REC-H.266-202008-I/en
[4] AV1 Bitstream & Decoding Process Specification, http://aomedia.org/av1/specification/
[5] Algorithm description for Versatile Video Coding and Test Model 11 (VTM 11), https://jvet-experts.org/doc_end_user/current_document.php?id=10541
[6] Algorithm description of Enhanced Compression Model 12 (ECM 12), https://jvet-experts.org/doc_end_user/current_document.php?id=13915

**Claims**

1. A method of processing one or more blocks of a picture, the method comprising:

predicting one or more samples of a current block of the picture,
wherein predicting the one or more samples of the current block comprises:

- processing a plurality of sub-partitions of the current block using a certain processing order, the certain processing order starting with a first sub-partition, and
- predicting a sub-partition, which follows the first sub-partition, using one or more reference samples from one or at least two different reference areas of at least three reference areas.

2. The method of claim 1, wherein the at least three reference areas comprise at least:

- an above reference area including previously reconstructed reference samples above the current block,
- a left reference area including previously reconstructed reference samples left of the current block,
- a sub-partition reference area including reconstructed samples from a previously predicted sub-partition.

3. The method of claim 1 or 2, wherein

samples of the plurality of sub-partitions are predicted using one of the following:

- a uni-prediction mechanism,

- a bi-prediction mechanism, or
- a multi-prediction mechanism, and

the prediction mechanism used is signaled in a data stream, which includes data representing the picture.

4. The method of any one of the preceding claims, wherein

for predicting the sub-partitions, which follow the first sub-partition, the one or more reference samples are selected from three or more reference areas, and
the three or more reference areas comprise a right or a bottom reference area outside of the current block, the reference area including interpolated reference samples obtained by interpolating previously reconstructed reference samples from reference areas above, above-right and left of the current block.

5. The method of any one of the preceding claims, wherein, for predicting the sub-partitions, respective reference areas are selected, which include reference samples providing a best prediction accuracy.

6. The method of claim 5, wherein

the respective reference areas are selected per sub-partition, which follows the first sub-partition, and are signaled in a data stream, which includes data representing the picture, or
the respective reference areas are selected for all of the plurality of sub-partitions, which follow the first sub-partition, and are signaled in a data stream, which includes data representing the picture.

7. The method of claim 6, wherein

the respective reference areas selected for all of the plurality of sub-partitions are also used for the first sub-partition, or
respective reference areas are selected for the first sub-partition, and are signaled in the data stream, or
respective reference areas are selected for the first sub-partition based on an intra mode for predicting the first sub-partition.

8. The method of any one of the preceding claims, wherein the certain processing order comprises a forward processing order, the forward processing order predicting the plurality of sub-partitions in a sequence from the first sub-partition, which includes a top-left sample of the current block, to an end sub-partition, which includes a bottom-right sample of the current block.

9. The method of any one of claims 1 to 7, wherein the certain processing order comprises

- a specific processing order, the specific processing order processing the plurality of sub-partitions non-sequentially according to a defined or signaled processing order, or
- an inverse processing order, the inverse processing order predicting the plurality of sub-partitions in a sequence from the first start sub-partition, which includes a bottom-right sample of the current block, to an end sub-partition, which includes a top-left sample of the current block.

10. The method of claim 9, wherein, when predicting a sub-partition using reference samples selected from a sub-partition reference area below or right of the sub-partition,

- dedicated intra prediction directions are used to facilitate a prediction process using the reference samples from the below and/or right sub-partition reference area, or
- intra prediction directions from below and/or right are mapped to corresponding intra prediction directions from above and/or left, or
- the reference samples from the below and/or right sub-partition reference area are projected to above and/or left reference areas of the current block or a currently processed sub-partition.

11. The method of any one of the preceding claims, wherein

the current block is partitioned into the plurality of sub-partitions such that each of the plurality of sub-partitions has the same sub-partition size, or

the current block is partitioned into the plurality of sub-partitions such that at least two of the plurality of sub-partitions have different sub-partition sizes.

12. The method claim 11, wherein the sub-partition, which includes the bottom-right sample of the current block, has a sub-partition size which is smaller than a sub-partition size of any other sub-partition of the current block.

13. The method of claim 11 or 12, wherein the current block is partitioned into the plurality of sub-partitions according to

   - a horizontal partitioning mode which partitions the current block into N horizontal sub-partitions, each horizontal sub-partition having the same width, with N being an integer > 1, or
   - a vertical partitioning mode which partitions the current block into N vertical sub-partitions, each vertical sub-partition having the same height, with N being an integer > 1.

14. A non-transitory computer-readable storage medium comprising instructions which, when executed by a computer, cause the computer to carry out the method of any one of the preceding claims.

15. An apparatus of processing one or more blocks of a picture, the apparatus comprising:

   a processing module configured to predict one or more samples of a current block of the picture,
   wherein, for predicting the one or more samples of the current block, the processing module is configured to

      - process a plurality of sub-partitions of the current block using a certain processing order, the certain processing order starting with a first sub-partition, and
      - predict a sub-partition, which follows the first sub-partition, using one or more reference samples from one or at least two different reference areas of at least three reference areas.

Fig. 1

Fig. 2

Fig. 3

Samples used for
template prediction

Samples used for
template cost calculation

Above Template

Samples used for
template cost calculation

Left
Template

Current CU

Samples used for
template cost calculation

Fig. 4

Fig. 5

Predicting one or more samples of a current block of the picture.

Processing a plurality of sub-partitions of the current block using a specific processing order or an inverse processing order, the inverse processing order starting with a sub-partition including a bottom-right sample of the current block, and the specific processing order processing the plurality of sub-partitions non-sequentially according to a defined or signaled processing order — S100 / S102

Processing a plurality of asymmetric sub-partitions of the current block — S104

Fig. 6(A)

Processing module

Process a plurality of sub-partitions of the current block
using a specific processing order or an inverse
processing order, the inverse processing order starting
with a sub-partition including a bottom-right sample of
the current block , and the specific processing order
processing the plurality of sub-partitions non-
sequentially according to a defined or signaled
processing order                                    302a

Process a plurality of asymmetric sub-partitions of the
current block                              .         302b

302

300

Fig. 6(B)

8/31

Fig. 7

Processing order

$W = 64$

$H = 16$ | CU |

(A) Original WxH partition

Vertical →

| ① Sub-partition #4 | Sub-partition #3 | Sub-partition #2 | Sub-partition #1 ② |

$H = 16$

$W_4=16$   $W_3=16$   $W_2=16$   $W_1=16$

$W = 16$

(B) $H = 64$ | CU | ②

Original WxH partition

Horizontal →

$W = 16$

| ① Sub-partition #4 | $H_4 = 16$ |
| Sub-partition #3 | $H_3 = 16$ |
| Sub-partition #2 | $H_2 = 16$ |
| Sub-partition #1 ② | $H_1 = 16$ |

Processing order

Fig. 8

$W$

① Sub-partition #2 $\frac{H}{4}$

Horizontal Sub-partition #3 $\frac{H}{4}$

Sub-partition #1 $\frac{H}{4}$

Sub-partition #4 ② $\frac{H}{4}$

$W$

① CU ②

$H$

Original WxH partition

①

Vertical Sub-partition #2 Sub-partition #3 Sub-partition #1 Sub-partition #4 $H$

②

$\frac{W}{4}$ $\frac{W}{4}$ $\frac{W}{4}$ $\frac{W}{4}$

Fig. 9

Original WxH partition

Horizontal

Vertical

$W$

① Sub-partition #2

Sub-partition #1 ②

$\dfrac{3 \times H}{4}$

$\dfrac{H}{4}$

① Sub-partition #2

Sub-partition #1

②

$\dfrac{3 \times W}{4}$

$\dfrac{W}{4}$

$H$

Fig. 10

$W$

① Sub-partition #3 $\frac{H}{2}$

Horizontal

Sub-partition #2 $\frac{H}{4}$

Sub-partition #1 ② $\frac{H}{4}$

$W$

① CU

$H$

① ②

Original WxH partition

Vertical

① Sub-partition #3 | Sub-partition #2 | Sub-partition #1

②

$H$

$\frac{W}{2}$ $\frac{W}{4}$ $\frac{W}{4}$

Fig. 11

Original block's reference samples

Horizontal

Sub-partition #2

Sub-partition #1

Original block's reference samples

$W$

①

CU

$H$

②

Original WxH partition

Vertical

①

Sub-partition #2

Sub-partition #1

②

Fig. 12

Fig. 13

$W = 8$

① Sub-partition #2

$h_2 = 3$

$h1 = 1$ Sub-partition #1 ②

$W = 8$

① Sub-partition #2

$h_2 = 4$

Copy samples

...

...

Extended area

Fig. 14

```
┌──────────────────────────────────────────────────────┐
│          Predicting one or more samples of a          │
│            current block of the picture               │
│                                                        │───── S200
│  ┌──────────────────────────────────────────────┐    │
│  │ Processing a plurality of sub-partitions of the current │
│  │  block using a certain processing order, the certain    │
│  │  processing order starting with a first sub-partition   │───── S202
│  └──────────────────────────────────────────────┘    │
│                                                        │
│  ┌──────────────────────────────────────────────┐    │
│  │ Predicting a sub-partition, which follows the first sub- │
│  │  partition, using one or more reference samples from     │
│  │ one or at least two different reference areas of at least │───── S204
│  │              three reference areas               │
│  └──────────────────────────────────────────────┘    │
│                                                        │
└──────────────────────────────────────────────────────┘
```

Fig. 15

Fig. 16

310

| Sub-partition #4 |
| Sub-partition #3 |
| Sub-partition #2 |
(A) | Sub-partition #1 |

Processing order

Ref. side above 312a

Ref. side left 312b

310

Sub-partition #1

(B)   Prediction of sub-partition #1

Ref. side above

Ref. side left 312b

310

Sub-partition #2

Ref. side below 314#1
Sub-partition #1

(C)   Prediction of sub-partition #2

Fig. 17

Ref. side above 312a

310

**Sub-partition #3**

Ref. side below 314#2
**Sub-partition #2**

**Sub-partition #1**

Ref. side left 312b

Prediction of sub-partition #3

(D)

Ref. side above 312a

**Sub-partition #4**

Ref. side below 314#3
**Sub-partition #3**

**Sub-partition #2** | 310

**Sub-partition #1**

Ref. Sideleft 312b

Prediction of sub-partition #4

(E)

Fig. 17

Fig. 18

Fig. 19

Original block's
reference samples

312a  A0

Sub-partition #1

A1  314#1

Reference samples
From sub-partition #1

P  Sub-partition #2

312b

Sub-partition #3

Sub-partition #4

Fig. 20

Fig. 21

**EP 4 730 772 A1**

Original block's reference samples

312a
A
TR

Sub-partition #4

L
P
R

B  314#3

Sub-partition #3

Sub-partition #2

Sub-partition #1

312b

312

Interpolated reference samples

Fig. 22

55

Decoding the picture
from an encoded data stream

S500

Processing a plurality of sub-partitions of the current block using a certain processing order, the certain processing order starting with a first sub-partition

S502

Predicting a sub-partition, which follows the first sub-partition, using one or more reference samples from one or at least two different reference areas of at least three reference areas

S504

Fig. 23

| Receiving an original picture | ~ S600 |

Encoding the picture into an encoded data stream ~ S602

| Processing a plurality of sub-partitions of the current block using a certain processing order, the certain processing order starting with a first sub-partition | ~ S602a |

| Predicting a sub-partition, which follows the first sub-partition, using one or more reference samples from one or at least two different reference areas of at least three reference areas | ~ S602b |

Including into the data stream an indication concerning one or more of:
a processing order for the current block
a mode for partitioning the current block ~ S604

Fig. 24

Processing module

Processing a plurality of sub-partitions of the current
block using a certain processing order, the certain
processing order starting with a first sub-partition

402a

Predicting a sub-partition, which follows the first sub-
partition, using one or more reference samples from
one or at least two different reference areas of at least
three reference areas.

402b

402

400

Fig. 25

Decoder module

502

Processing module

504

500

Fig. 26

Encoder module

602

Processing module

604

600

Fig. 27

702          704

encoder          decoder

600          700          500

Fig. 28

900

901
computing
unit

902
ROM

903
RAM

904

905
I/O interface

906
input unit

907
output unit

908
storage
unit

909
communica-
tion unit

Fig. 29

| | Europäisches Patentamt European Patent Office Office européen des brevets | **EUROPEAN SEARCH REPORT** | Application Number EP 24 31 5485 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/136373 A1 (DE LUXÁN HERNÁNDEZ SANTIAGO [DE] ET AL) 6 May 2021 (2021-05-06) * paragraphs [0061] - [0069], [0086]; figures 4, 5,12 * | 1-15 | INV. H04N19/105 H04N19/119 H04N19/147 H04N19/176 H04N19/46 |
| X | US 2024/007624 A1 (JEON BYEUNG WOO [KR] ET AL) 4 January 2024 (2024-01-04) * paragraphs [0125] - [0127], [0133] - [0136], [0162], [0205] - [0208]; figures 7, 13, 18 * | 1-15 | |
| A | US 2022/191470 A1 (LEE BAE KEUN [KR]) 16 June 2022 (2022-06-16) * paragraphs [0314] - [0328]; figure 19 * | 1-15 | |
| A | US 2022/166973 A1 (KANG JUNG WON [KR] ET AL) 26 May 2022 (2022-05-26) * paragraphs [0283], [0340]; figure 22 * | 1-15 | |

TECHNICAL FIELDS SEARCHED (IPC)

H04N

The present search report has been drawn up for all claims

| Place of search | Date of completion of the search | Examiner |
|---|---|---|
| Munich | 11 March 2025 | Montoneri, Fabio |

## ANNEX TO THE EUROPEAN SEARCH REPORT
## ON EUROPEAN PATENT APPLICATION NO.

EP 24 31 5485

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2025

| Patent document cited in search report | Publication date | Patent family member(s) | | Publication date |
|---|---|---|---|---|
| US 2021136373 A1 | 06-05-2021 | CN | 112703741 A | 23-04-2021 |
| | | CN | 119135930 A | 13-12-2024 |
| | | EP | 3821605 A1 | 19-05-2021 |
| | | JP | 7447076 B2 | 11-03-2024 |
| | | JP | 2021524712 A | 13-09-2021 |
| | | JP | 2024059896 A | 01-05-2024 |
| | | KR | 20210027477 A | 10-03-2021 |
| | | KR | 20240152972 A | 22-10-2024 |
| | | TW | 202007158 A | 01-02-2020 |
| | | TW | 202304207 A | 16-01-2023 |
| | | US | 2021136373 A1 | 06-05-2021 |
| | | US | 2023025784 A1 | 26-01-2023 |
| | | US | 2024114135 A1 | 04-04-2024 |
| | | WO | 2020012023 A1 | 16-01-2020 |
| US 2024007624 A1 | 04-01-2024 | US | 2024007624 A1 | 04-01-2024 |
| | | WO | 2022197135 A1 | 22-09-2022 |
| US 2022191470 A1 | 16-06-2022 | CN | 112166605 A | 01-01-2021 |
| | | CN | 118678053 A | 20-09-2024 |
| | | CN | 118678054 A | 20-09-2024 |
| | | CN | 118678055 A | 20-09-2024 |
| | | CN | 118678056 A | 20-09-2024 |
| | | CN | 118678057 A | 20-09-2024 |
| | | CN | 118694920 A | 24-09-2024 |
| | | CN | 118741090 A | 01-10-2024 |
| | | CN | 118748715 A | 08-10-2024 |
| | | US | 2021281830 A1 | 09-09-2021 |
| | | US | 2022191470 A1 | 16-06-2022 |
| | | US | 2024251071 A1 | 25-07-2024 |
| | | US | 2024357074 A1 | 24-10-2024 |
| | | WO | 2019245340 A1 | 26-12-2019 |
| US 2022166973 A1 | 26-05-2022 | CN | 113875237 A | 31-12-2021 |
| | | KR | 20200119744 A | 20-10-2020 |
| | | US | 2022166973 A1 | 26-05-2022 |
| | | US | 2025071271 A1 | 27-02-2025 |
| | | WO | 2020209671 A1 | 15-10-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 24315484